(19) **Europäisches Patentamt European Patent Office Office européen des brevets**

(11) **EP 4 081 858 B1**

(12) **FASCICULE DE BREVET EUROPEEN**

(45) Date de publication et mention de la délivrance du brevet:
**10.09.2025 Bulletin 2025/37**

(51) Classification Internationale des Brevets (IPC):
***G02F 1/153*** *(2006.01)*

(21) Numéro de dépôt: **20855835.3**

(52) Classification Coopérative des Brevets (CPC):
**G02F 1/153**

(22) Date de dépôt: **21.12.2020**

(86) Numéro de dépôt international:
**PCT/FR2020/052582**

(87) Numéro de publication internationale:
**WO 2021/130442 (01.07.2021 Gazette 2021/26)**

(54) **SYSTÈME OPTIQUE AVEC DISPOSITIF FONCTIONNEL ÉLECTROCHIMIQUE À PROPRIÉTÉS OPTIQUES ET/OU ÉNERGÉTIQUES ÉLECTROCOMMANDABLES ET REVÊTEMENT DE CONTRÔLE CHROMATIQUE EN RÉFLEXION, PROCÉDÉS ASSOCIÉS**

OPTISCHES SYSTEM MIT EINER ELEKTROCHEMISCHEN FUNKTIONSVORRICHTUNG MIT ELEKTRISCH STEUERBAREN OPTISCHEN UND/ODER ENERGETISCHEN EIGENSCHAFTEN UND EINER BESCHICHTUNG ZUM STEUERN DER FARBE IN REFLEXION UND ZUGEHÖRIGE VERFAHREN

OPTICAL SYSTEM WITH AN ELECTROCHEMICAL FUNCTIONAL DEVICE HAVING ELECTRICALLY CONTROLLABLE OPTICAL AND/OR ENERGETIC PROPERTIES AND A COATING FOR CONTROLLING COLOUR IN REFLECTION, AND ASSOCIATED PROCESSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2019 FR 1915568**

(43) Date de publication de la demande:
**02.11.2022 Bulletin 2022/44**

(73) Titulaire: **Saint-Gobain Glass France**
**92400 Courbevoie (FR)**

(72) Inventeur: **CHEVALLIER, Théo**
**75019 Paris (FR)**

(74) Mandataire: **Saint-Gobain Recherche**
**41 Quai Lucien Lefranc**
**93300 Aubervilliers (FR)**

(56) Documents cités:
**WO-A1-2011/161110     US-A1- 2001 021 066**
**US-A1- 2018 321 567**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 4 081 858 B1**

**Description**

La présente invention se rapporte à un système optique comprenant un dispositif fonctionnel électrochimique à propriétés optiques et/ou énergétiques électrocommandables, communément nommés « dispositif électrochrome » et un revêtement de contrôle chromatique en réflexion.

Ledit système optique peut être obtenu par une méthode modification de la couleur observée en réflexion sur un ensemble optique de ce système optique.

Les dispositifs électrochromes présentent certaines caractéristiques pouvant être modifiées sous l'effet d'une alimentation électrique appropriée, entre un état clair et un état teinté, tout particulièrement la transmission, l'absorption, la réflexion dans certaines longueurs d'ondes du rayonnement électromagnétique, notamment dans le visible et/ou dans l'infrarouge, ou encore la diffusion lumineuse. La variation de transmission intervient généralement dans le domaine optique (infrarouge, visible, ultraviolet) et/ou dans d'autres domaines du rayonnement électromagnétique, d'où la dénomination de dispositif à propriétés optiques et/ou énergétiques variables, le domaine optique n'étant pas nécessairement le seul domaine concerné.

Sur le plan thermique, les vitrages dont on peut modifier l'absorption dans au moins une partie du spectre solaire permettent de contrôler l'apport solaire à l'intérieur des pièces ou habitacles/compartiments quand ils sont montés en vitrages extérieurs de bâtiment ou fenêtres de moyens de transport du type voiture, train, avion, et d'éviter un échauffement excessif de ceux-ci en cas de fort ensoleillement.

Sur le plan optique, ils permettent un contrôle du degré de vision, ce qui permet d'éviter l'éblouissement quand ils sont montés en vitrages extérieurs en cas de fort ensoleillement. Ils peuvent aussi avoir un effet de volet particulièrement intéressant, aussi bien en tant que vitrages extérieurs que s'ils sont utilisés en vitrages intérieurs, par exemple pour équiper des cloisons intérieures entre des pièces (bureaux dans un bâtiment), ou pour isoler des compartiments dans des trains ou des avions par exemple.

Dans ce contexte, il est connu de mettre en œuvre un système optique intégrant un dispositif électrochrome formé sur un substrat. En dépit de leurs propriétés avantageuses, les systèmes optiques pourvus de dispositifs électrochromes ont pour inconvénient de présenter une couleur en réflexion. Cette couleur est principalement due à la réflexion de la lumière incidente sur l'interface entre le dispositif électrochrome et une couche adjacente - substrat ou couche intermédiaire disposée entre le dispositif électrochrome et le substrat du dispositif électrochrome. Les documents US 2018/321567 A1, US 2001/021066 A1 et WO 2011/161110 A1 font partie de l'art antérieur utile à la compréhension de l'invention.

En outre, un deuxième inconvénient lié à l'utilisation de ces dispositifs est que cette couleur observée en réflexion varie selon l'angle de réflexion et donc selon l'angle d'observation.

Enfin, de petites inhomogénéités dans les épaisseurs des couches de l'empilement électrochrome peuvent aboutir à de larges inhomogénéités de couleur réfléchie.

Pour pallier ces inconvénients, il est décrit dans l'état de la technique un vitrage équipé d'un dispositif électrochrome déposé sur un substrat, ce même substrat étant feuilleté à l'aide d'une couche de Polyvinylbutyral (PVB) avec un contre-substrat. Une couche modificatrice de la réflexion est interposée entre le PVB et le contre-substrat. Cet ajout est complexe et nécessite l'utilisation d'un agencement complexe (feuilletage) de couches de support et de maintien de la couche modificatrice. Plus précisément, l'apparence visuelle de la couleur met en jeu trois paramètres psychosensoriels correspondant aux sensations subjectives de teinte, de saturation et de luminosité. La teinte est définie par les mots bleu, vert, rouge, etc. La saturation exprime le degré de coloration, par opposition à la quantité de radiation blanche appréciée dans le rayonnement coloré ; une couleur est d'autant moins saturée qu'elle paraît lavée de blanc. La luminosité ou clarté est un facteur achromatique qui se rapporte au niveau du stimulus coloré. Elle varie depuis une valeur maximale non éblouissante jusqu'à l'absence de lumière (le noir). On conçoit assez bien qu'en faisant varier indépendamment les uns des autres ces trois paramètres, on puisse réaliser toutes les sensations colorées imaginables. Dans ce contexte, les différents systèmes de description d'une couleur, par exemple les espaces colorimétriques de type CIE 1931 ou CIELAB 76, ne sont que des façons différentes de définir les trois paramètres qui la décrivent.

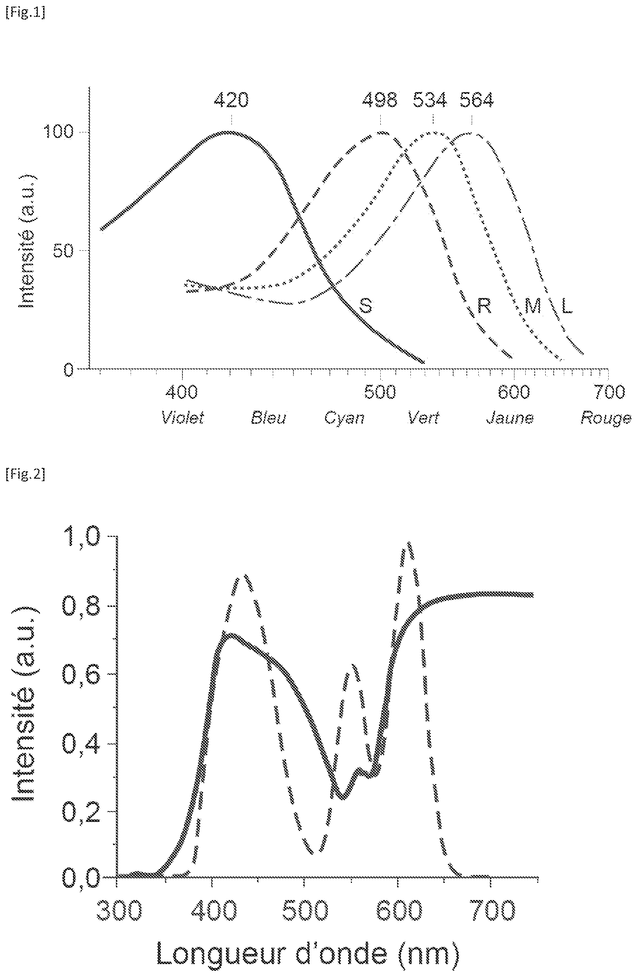

Au niveau de l'oeil humain, ces sensations de couleur sont décrites par des « quantités intégrales ». A ce titre, la chromaticité perçue, notion regroupant la teinte et la saturation, est la combiriaisori de trois signaux correspondants à trois types de photorécepteurs colorimétriques nommés cônes, qui sont présents sur la rétine. Tel qu'illustré par la Figure 1, chaque type de cône présente une sensibilité spectrale qui lui est propre. La chromaticité d'un objet peut donc être entièrement décrite via les quantités d'excitation de chacun de ces cônes. La quantité d'excitation d'un cône est l'intégrale de l'intensité spectrale de la lumière qui l'atteint en fonction de la sensibilité spectrale du cône. Ainsi, si le cône bleu est deux fois plus sensible à 420 nm qu'à 450 nm, alors une lumière incidente de 1 mW/cm$^2$ à 420 nm crée la même excitation qu'une lumière incidente de 2 mW/cm$^2$ à 450 nm. Tant que la même excitation des cônes est créée, la même couleur est ressentie, même si la distribution spectrale de la lumière est différente. À titre d'exemple, les deux spectres représentés à la Figure 2 créent la même sensation chromatique pour un être humain, puisqu'ils provoquent la même excitation pour chaque cône. Pour une couleur donnée, on peut donc identifier une infinité de spectres pour la produire.

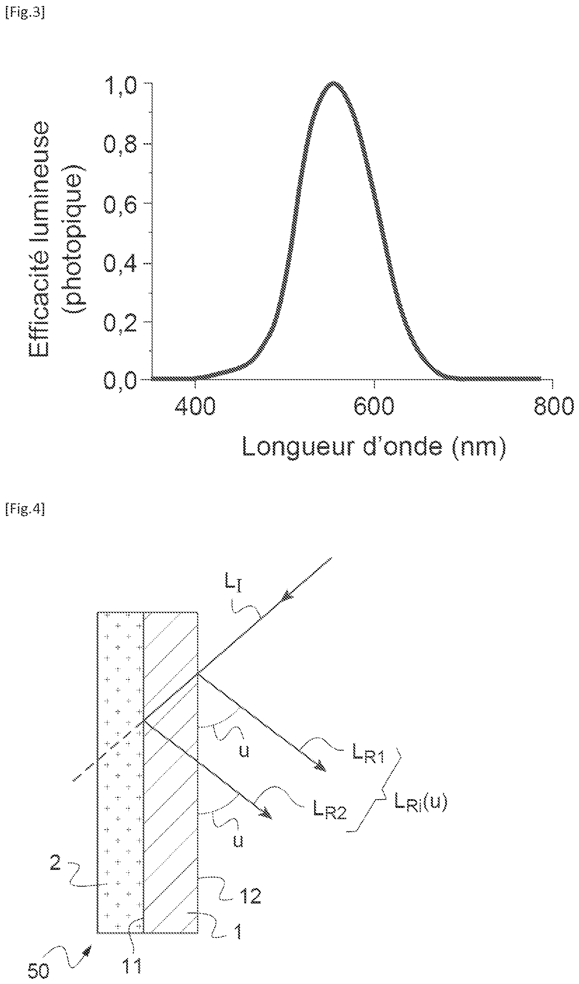

Les mêmes principes s'appliquent à la description de la sensation d'intensité lumineuse. Dans ce cas, des photorécepteurs nommés bâtonnets entrent également en jeu. Une sensibilité globale à l'intensité lumineuse pour un œil humain moyen a été déterminée. Tel qu'illustré par la Figure 3, la sensibilité maximale de l'œil humain est obtenue pour un rayonnement électromagnétique de longueur d'onde 550nm, ce qui correspond à la longueur d'onde de la teinte « vert ». Dans ce contexte, la réflexion lumineuse désigne la réflexion moyenne pondérée par une courbe d'efficacité lumineuse décrivant la sensibilité humaine. La réflexion lumineuse est donc une valeur intégrale mesurant la réflexion comme ressentie par un œil humain, pour une quantité donnée de lumière incidente. La valeur de cette réflexion lumineuse peut différer significativement d'un spectre de réflexion à l'autre, bien que ces spectres permettent l'obtention d'une même chromaticité en réflexion.

Dans la suite du texte et à des fins descriptives, l'apparence visuelle de la couleur en réflexion et les valeurs de réflexion lumineuse sont mesurées selon la norme NF EN 410, communément utilisée pour la détermination des caractéristiques lumineuses et solaires des vitrages dans la construction. De manière alternative, ces données peuvent également être mesurées selon d'autres protocoles expérimentaux connus et ceci sans s'éloigner pour autant du cœur de l'invention.

Il existe donc un besoin de fournir un système optique muni d'un dispositif électrochrome dont la couleur en réflexion peut être contrôlée de manière simple, efficace et fiable.

Plus particulièrement, on propose selon l'invention un système optique selon la revendication 1 et comprenant :

- un ensemble optique comprenant un substrat à fonction verrière muni de deux faces principales opposées et un dispositif fonctionnel électrochimique à propriétés optiques et/ou énergétiques électrocommandables formé sur l'une de ces deux faces principales, ce dispositif fonctionnel électrochimique comprenant au moins un empilement électrochrome muni de :

  > une première couche conductrice transparente,
  > une électrode de travail agencée au-dessus de ladite première couche conductrice transparente, une contre-électrode agencée au-dessus de ladite électrode de travail,
  > une seconde couche conductrice transparente agencée au-dessus de ladite contre-électrode,
  > des ions Lithium introduits au sein dudit empilement électrochrome,
  > et, préférentiellement, une couche d'un conducteur ionique distincte intercalée entre l'électrode et la contre-électrode, cet ensemble optique présentant un état chromatique initial avec une valeur initiale de chromaticité (L*ui ; a*ui ; b*ui) en réflexion selon un premier angle de réflexion (u) du côté du substrat,

- un revêtement de contrôle chromatique en réflexion formé sur l'autre face principale du substrat, et formant une face externe dudit système optique, adapté pour que le système optique présente un état chromatique final avec une valeur finale de chromaticité (L*uf ; a*uf ; b*uf) en réflexion selon ce premier angle de réflexion (u), cet état chromatique final étant plus proche que l'état chromatique initial d'un état chromatique de référence présentant une valeur de référence de chromaticité (L*uref ; a*uref ; b*uref) audit premier angle de réflexion (u), ce qui correspond à une variation ΔCu de distance chromatique (Cui, Cuf) entre la valeur initiale de chromaticité et la valeur de référence, d'une part, et entre la valeur finale de chromaticité et la valeur de référence, d'autre part, inférieure à 0 audit premier angle de réflexion (u) prédéterminé, soit

*[Math.1]*

$$\Delta Cu = Cuf - Cui$$
$$= \sqrt{(a*uf - a*uref)^2 + (b*uf - b*uref)^2}$$
$$- \sqrt{(a*ui - a*uref)^2 + (b*ui - b*uref)^2} < 0$$

Ainsi, avantageusement, selon l'invention, le système optique obtenu présente une couleur contrôlée en réflexion. La couleur initiale de l'ensemble optique formé par le dispositif électrochrome et le substrat, donnée par la réflexion de la lumière incidente sur l'interface entre le dispositif électrochrome et la couche adjacente, est modifiée de manière contrôlée par le revêtement qui forme la face externe du système optique.

Cette face externe du système optique est une face sur laquelle aucune autre couche n'est agencée. Comme décrit en détail ultérieurement, lorsque le système optique est intégré à un vitrage, cette face externe peut notamment être exposée à l'environnement extérieur du vitrage ou être comprise à l'intérieur d'un vitrage de type double vitrage ou triple vitrage.

La couleur en réflexion du revêtement peut en effet être contrôlée pour que la réflexion globale de la lumière le système optique, qui comprend notamment une composante réfléchie sur le revêtement, présente une couleur finale à un angle de réflexion donné, cette couleur finale étant plus proche d'une couleur de référence souhaitée que la couleur initiale.

Le revêtement forme la face externe du système optique, de sorte qu'il n'est pas nécessaire de prévoir un contre-substrat pour recouvrir ce revêtement ou de mettre en œuvre un procédé de fabrication complexe aboutissant à la prise en sandwich du revêtement entre deux autres couches du système optique global.

Il est ainsi possible de contrôler la couleur de la réflexion sur le système optique selon l'invention de manière simple, efficace et rapide. Cette couleur peut ainsi être neutralisée ou modifiée de manière à se situer dans un domaine de couleurs cibles souhaitées. En outre, la réflexion sur le revêtement permet d'atténuer les inhomogénéités de couleurs liées aux inhomogénéités d'épaisseurs des couches de l'empilement électrochrome. Enfin, il est possible de modifier la couleur de la réflexion de manière à réduire la variation de couleur observée avec l'angle de réflexion.

De manière avantageuse, le revêtement de contrôle chromatique peut être appliqué sur un substrat de toute nature et d'épaisseur quelconque, préalablement trempé ou non. Il est appliqué de préférence sur un substrat non trempé. Il peut être appliqué sur un substrat présentant toute caractéristique optique de transmission, en particulier sur un substrat teinté ou non.

D'autres caractéristiques avantageuses et pour certaines non limitatives du système optique selon l'invention sont les suivantes :

- une réflexion globale de la lumière sur le système optique selon le premier angle de réflexion u comprenant au moins un faisceau lumineux réfléchi sur le revêtement de contrôle chromatique, le spectre de ce faisceau lumineux réfléchi comporte au moins une composante spectrale située dans au moins une plage de longueurs d'onde de réflexion effective [λmin ; λmax], ladite plage de longueurs d'onde de réflexion effective [λmin ; λmax] étant définie de sorte qu'une variation de réflexion par l'ensemble optique d'une quantité quelconque de lumière à une longueur d'onde λ comprise dans ladite plage de réflexion effective [λmin ; Amax] engendre une variation ΔCu(λ) de distance chromatique (Cui, Cu(λ)) inférieure à 0 audit premier angle de réflexion u, où :

[Math.2]

$$\Delta Cu(\lambda) = Cu(\lambda) - Cui$$
$$= \sqrt{(a*u(\lambda) - a*uref)^2 + (b*u(\lambda) - b*uref)^2}$$
$$- \sqrt{(a*ui - a*uref)^2 + (b*ui - b*uref)^2}$$

avec (a*ui ; b*ui) les coordonnées chromatique initiales de la valeur initiale de chromaticité en réflexion selon le premier angle de réflexion u, Cui la distance chromatique entre ces coordonnées chromatiques initiales (a*ui; b*ui) et les coordonnées chromatiques de ladite valeur de référence de chromaticité en réflexion (a*uref ; b*uref) selon ce premier angle de réflexion u, (a*u(λ) ; b*u(λ)) les coordonnées chromatique de la valeur de chromaticité en réflexion selon le premier angle de réflexion u obtenue suite à la variation de réflexion réalisée à ladite longueur d'onde À,
Cu(λ) la distance chromatique entre ces coordonnées chromatiques (a*u(λ) ; b*u(λ))) et les coordonnées chromatiques de ladite valeur de référence de chromaticité en réflexion (a*uref ; b*uref) selon le premier angle de réflexion u;

- l'intensité lumineuse des composantes spectrales du faisceau réfléchi par le revêtement de contrôle chromatique comprises dans ladite plage de longueurs d'onde de réflexion effective [λmin ; λmax] constituent au moins 50%, préférentiellement au moins 55%, préférentiellement au moins 60%, préférentiellement au moins 65%, préférentiellement au moins 70% de l'intensité lumineuse totale du faisceau réfléchi par ledit revêtement de contrôle chromatique;

- selon l'invention telle que revendiquée, l'état chromatique initial de l'ensemble optique présentant une valeur initiale de chromaticité (a*vi ; b*vi) en réflexion selon un deuxième angle de réflexion v différente de la valeur initiale de chromaticité (a*ui ; b*ui) en réflexion selon le premier angle de réflexion u, une distance chromatique initiale est définie entre ladite valeur initiale de chromaticité (a*ui ; b*ui) observée audit premier angle de réflexion u et la valeur initiale de chromaticité (a*vi ; b*vi) observée audit deuxième angle de réflexion v, le revêtement de contrôle chromatique en réflexion est adapté pour que le système optique présente un état chromatique final avec une valeur finale de chromaticité (a*vf ; b*vf) en réflexion selon ce deuxième angle de réflexion v, une distance chromatique finale entre ladite valeur finale de chromaticité (a*uf ; b*uf) observée audit premier angle de réflexion u et la valeur finale de chromaticité (a\*vf ; b\*vf) observée au deuxième angle de réflexion v étant inférieure à ladite distance chromatique initiale, ce qui correspond à une variation $\Delta Cang(u,v)$ de distance chromatique ($Cang(u,v)i$, $Cang(u,v)f$) entre la distance chromatique initiale entre les valeurs initiales de chromaticité audits premier et deuxième angle de réflexion, d'une part, et la distance chromatique finale entre les valeurs finales de chromaticité audits premier et deuxième angle de réflexion, d'autre part, inférieure à 0, soit

[Math.3]

$$\Delta Cang(u,v) = Cang(u,v)f - Cang(u,v)i$$
$$= \sqrt{(a*uf - a*vf)^2 + (b*uf - b*vf)^2} - \sqrt{(a*ui - a*vi)^2 + (b*ui - b*vi)^2}$$
$$< 0$$

- ledit revêtement de contrôle chromatique est directement en contact avec ledit substrat ;
- ledit revêtement de contrôle chromatique comprend au moins une couche d'un matériau présentant des propriétés de réflexion telles qu'un faisceau lumineux réfléchi par ce revêtement présente un état chromatique prédéterminé et/ou une variation de valeur chromatique en fonction de l'angle de réflexion inférieure à une valeur seuil prédéterminée ;
- l'état chromatique prédéterminé du faisceau lumineux réfléchi par le revêtement de contrôle chromatique en réflexion est tel que a\* et b\* sont inférieurs strictement à zéro au moins sur une plage prédéterminée d'angles de réflexion ;
- selon l'invention telle que revendiquée, ledit revêtement de contrôle chromatique comprend au moins une couche d'épaisseur comprise entre 1 et 80 nanomètres d'au moins un matériau parmi les suivants :

  - MOx avec x entre 1 et 3, préférentiellement entre 1,5 et 2,5, M étant l'un des composés suivants : Si, Ti, Zr, Hf, Sn ;
  - NbOx avec x entre 1,5 et 3,5, préférentiellement entre 2 et 3 ;
  - MNx avec x entre 0 et 2, préférentiellement entre 0,5 et 1,5, M étant l'un des composés suivants : Nb, Ti, Zr, Hf ;
  - SiNx avec x entre 0,7 et 2, préférentiellement entre 1 et 1,7 ;
  - SnNx avec x entre 0 et 1,5, préférentiellement entre 0,3 et 1 ;
  - MOxNy avec x entre 0 et 2,2 et y entre 0 et 1,2, M étant l'un des composés suivants : Ti, Zr, Hf ;
  - MOxNy avec x entre 0 et 2,2 et y entre 0 et 1,5, M étant l'un des composés suivants : Si, Sn ;
  - NbOxNy avec x entre 0 et 2,7 et y entre 0 et 1,2 ;
  - M1M2aOxNy avec a entre 0 et 1, x entre 0 et 4,4, y entre 0 et 2,4, M1 et M2 étant l'un des composés suivants : Ti, Zr, Hf ;
  - SnZnaOx avec a entre 0 et 1,2 et x entre 0 et 3,5, préférentiellement entre 1,8 et 3,2 ;
  - ledit revêtement de contrôle chromatique comprend au moins une couche d'au moins un matériau parmi les suivants SiO2, TiO2, Nb2O5, Si3N4, ZrO2, TiZrO4, SnO2, SnZnO3, TiN, NbN, SiOxNy, HfO2, HfN, SnN, TiOxNy, NbOxNy, TiZrOxNy ;
  - selon l'invention telle que revendiquée, au moins 30%, préférentiellement au moins 40%, préférentiellement au moins 50%, préférentiellement au moins 60%, préférentiellement au moins 70%, préférentiellement au moins 80% de l'intensité lumineuse totale de la réflexion globale sur le système optique à l'angle de réflexion u est réalisée par la réflexion sur ledit revêtement de contrôle chromatique.

L'invention concerne également un procédé de modification de la couleur destiné à être observée par un observateur en réflexion d'un ensemble optique pour former un système optique selon la revendication 10, ledit ensemble optique comprenant un substrat à fonction verrière muni de deux faces principales opposées et un dispositif fonctionnel électrochimique à propriétés optiques et/ou énergétiques électrocommandables formé sur l'une de ces deux faces principales du substrat, ce dispositif fonctionnel électrochimique comprenant au moins un empilement électrochrome (2) muni de :

une première couche conductrice transparente,
une électrode de travail agencée au-dessus de ladite première couche conductrice transparente,
une contre-électrode agencée au-dessus de ladite électrode de travail,
une seconde couche conductrice transparente agencée au-dessus de ladite contre-électrode,
des ions Lithium introduits au sein dudit empilement électrochrome,

et préférentiellement une couche d'un conducteur ionique distincte intercalée entre l'électrode et la contre-électrode, ledit procédé modifiant la couleur depuis un état chromatique initial présentant une valeur initiale de chromaticité (L*ui ; a*ui ; b*ui) observée à un premier angle de réflexion u prédéterminé vers un état chromatique final présentant une valeur finale de chromaticité (L*uf ; a*uf ; b*uf) observée à ce premier angle de réflexion u, cet état chromatique final étant plus proche que l'état chromatique initial d'un état chromatique de référence présentant une valeur de référence de chromaticité (L*uref ; a*uref ; b*uref) audit premier angle de réflexion u,

ledit procédé comprenant au moins une étape de modification des propriétés de réflexion par agencement d'un revêtement de contrôle chromatique en réflexion sur l'autre face principale du substrat dudit système optique, de sorte qu'une variation ΔCu de distance chromatique (Cui, Cuf) entre la valeur initiale de chromaticité et la valeur de référence de chromaticité d'une part et entre la valeur finale de chromaticité et la valeur de référence de chromaticité d'autre part est inférieure à 0 audit premier angle de réflexion u, soit

[Math.4]

$$\Delta Cu = Cuf - Cui$$
$$= \sqrt{(a*uf - a*uref)^2 + (b*uf - b*uref)^2}$$
$$- \sqrt{(a*ui - a*uref)^2 + (b*ui - b*uref)^2} < 0$$

Ainsi, grâce au procédé selon l'invention, il est possible d'obtenir facilement un système optique conforme à l'invention en modifiant la couleur d'un ensemble optique donnée. Selon l'invention telle que revendiquée, ledit état chromatique initial présentant une distance chromatique initiale entre ladite valeur initiale de chromaticité (L*ui ;a*ui ; b*ui) observée audit premier angle de réflexion u et une valeur initiale de chromaticité (L*vi ; a*vi ; b*vi) observée à un deuxième angle de réflexion v, ledit procédé comprend au moins une autre étape de modification des propriétés de réflexion de la face externe dudit ensemble optique de sorte que, une variation ΔCang(u,v) de distance chromatique (Cang(u,v)i, Cang(u,v)f) entre la distance chromatique initiale entre les valeurs initiales de chromaticité audits premier et deuxième angle de réflexion d'une part et la distance chromatique finale entre les valeurs finales de chromaticité audits premier et deuxième angle de réflexion d'autre part est inférieure à 0, soit

[Math.5]

$$\Delta Cang(u,v) = Cang(u,v)f - Cang(u,v)i$$
$$= \sqrt{(a*uf - a*vf)^2 + (b*uf - b*vf)^2}$$
$$- \sqrt{(a*ui - a*vi)^2 + (b*ui - b*vi)^2} < 0$$

L'invention concerne également un procédé de fabrication d'un système optique tel que décrit précédemment.

Elle concerne également l'utilisation d'un système optique tel que décrit précédemment en tant que vitrage bâtiment, notamment vitrage extérieur de cloison interne ou de porte vitrée, en tant que vitrage équipant les cloisons internes ou les fenêtres de moyens de transport du type train, avion, voiture, bateau, en tant que vitrages d'écran de visualisation du type écran d'ordinateur ou de télévision, pour des objectifs d'appareils photographiques ou des protections de panneaux solaires.

La description qui va suivre en regard des dessins annexés, donnés à titre d'exemples non limitatifs, fera bien comprendre en quoi consiste l'invention et comment elle peut être réalisée.

Sur les dessins annexés :

[Fig. 1] est un graphique illustrant la sensibilité spectrale des bâtonnets et cônes photosensibles présents dans un œil humain,

[Fig. 2] est un graphique représentant deux spectres lumineux conduisant à l'observation d'une couleur de même chromaticité,

[Fig. 3] est une représentation graphique de la sensibilité de l'oeil humain en fonction de la longueur d'onde d'un rayon incident,

[Fig. 4] est une vue partielle en coupe d'un ensemble optique comprenant un substrat à fonction verrière et un empilement électrochrome,

[Fig. 5] est une vue partielle en coupe d'un système optique selon l'invention comprenant l'ensemble optique de la figure 1 et un revêtement de contrôle chromatique en réflexion, et

[Fig. 6] est un graphique illustrant dans un espace colorimétrique CIE L*a*b* la modification de la couleur en réflexion de l'ensemble optique de la figure 1 selon un mode de réalisation particulier de l'invention,

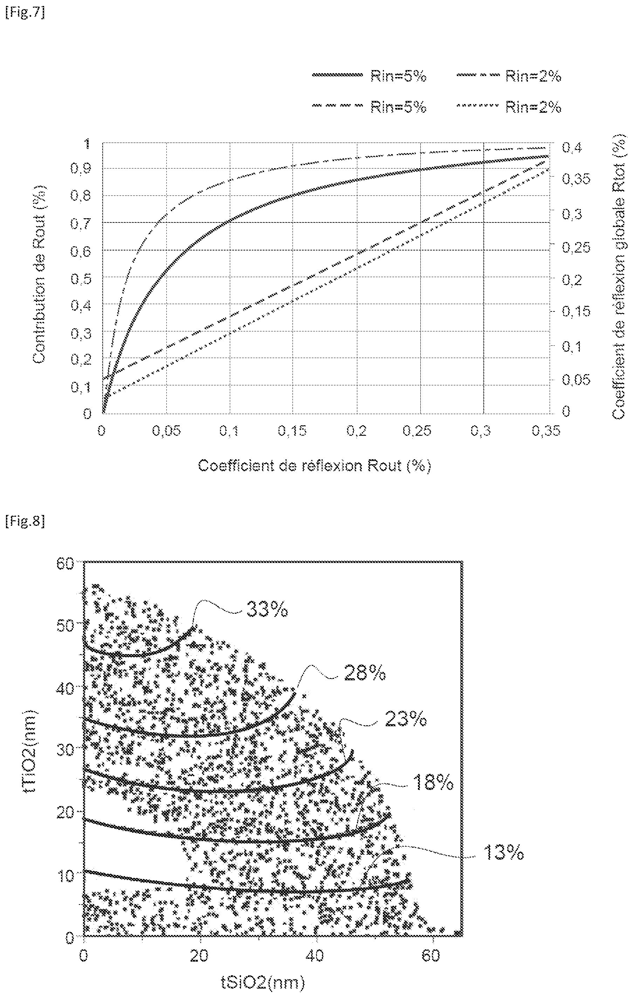

[Fig. 7] est un graphique illustrant l'évolution du coefficient de réflexion globale Rtot de la lumière sur le système optique selon l'invention en fonction du coefficient de réflexion Rout de la lumière sur le revêtement de contrôle chromatique en réflexion et l'évolution de la contribution de ce coefficient de réflexion Rout de la lumière sur le revêtement de contrôle chromatique en réflexion dans la réflexion globale de la lumière sur le système optique en en fonction du coefficient de réflexion Rout de la lumière sur le revêtement de contrôle chromatique en réflexion et pour différentes valeur du coefficient de réflexion de la lumière sur l'interface entre le substrat et l'empilement électrochrome,

[Fig. 8] est un graphique représentant les couples d'épaisseurs de TiO2 et SiO2 pour former un revêtement de contrôle chromatique adapté à fournir, lorsque déposé sur un vitrage SageGlass®, un décalage de couleur tel que les coordonnées colorimétriques a* et b* dans le système CIELAB de l'ensemble optique en réflexion sont négatives avec une dépendance angulaire C*(0°-60°) inférieure à 5, et précisant le coefficient de réflexion de ce revêtement déposé sur ce même substrat,

[Fig. 9] est un graphique représentant les couples d'épaisseurs de SiN et SiO2 pour former un revêtement de contrôle chromatique adapté à fournir, lorsque déposé sur un vitrage SageGlass®, un décalage de couleur tel que les coordonnées colorimétriques a* et b* dans le système CIELAB de l'ensemble optique en réflexion sont négatives avec une dépendance angulaire C*(0°-60°) inférieure à 5, et précisant le coefficient de réflexion de ce revêtement déposé sur ce même substrat,

En préliminaire, on notera que, d'une figure à l'autre, les éléments identiques ou similaires de ces différents modes de réalisation de l'invention, seront référencés par les mêmes signes de référence et ne seront pas décrits à chaque fois.

Plusieurs modes de réalisation particuliers de l'invention sont décrits par la suite. Il est entendu que la présente invention n'est nullement limitée par ces modes de réalisation particuliers et que d'autres modes de réalisation peuvent parfaitement être mis en œuvre.

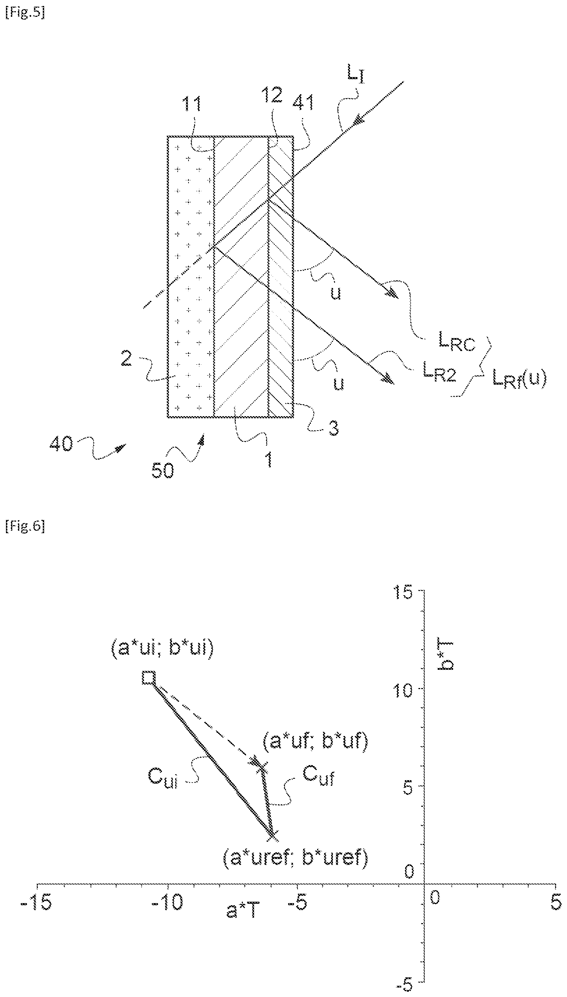

Comme illustré par la figure 5, l'invention se rapporte à un système optique 10 comprenant au moins les éléments optiques suivants:

- un ensemble optique 50 comprenant un substrat 1 à fonction verrière muni de deux faces principales opposées 11, 12 et un dispositif fonctionnel électrochimique à propriétés optiques et/ou énergétiques électrocommandables formé sur l'une 11 de ces deux faces principales, et
- un revêtement 3 de contrôle chromatique en réflexion formé sur l'autre face principale 12 du substrat 1, et formant une face externe 41 dudit système optique 40.

Ici, le dispositif fonctionnel électrochimique comprenant au moins un empilement électrochrome 2 muni de :

- une première couche conductrice transparente,
- une électrode de travail agencée au-dessus de ladite première couche conductrice transparente,
- une contre-électrode agencée au-dessus de ladite électrode de travail,
- une seconde couche conductrice transparente agencée au-dessus de ladite contre-électrode,
- des ions Lithium introduits au sein dudit empilement électrochrome, et,
- préférentiellement, une couche d'un conducteur ionique distincte intercalée entre l'électrode et la contre-électrode.

L'agencement d'une couche « au-dessus », ou « en dessous » d'une autre ne signifie pas ici nécessairement que ces deux couches sont en contacts directs l'une avec l'autre. Les termes « au-dessus » et « en-dessous » se réfèrent ici à l'ordre d'agencement de ces différents éléments, choisi de manière arbitraire par rapport au substrat à fonction verrière. De manière alternative, un tel ordre d'agencement peut donc être inversé, par rapport à ce même substrat. De plus, deux couches déposées l'une au-dessus de l'autre peuvent par exemple être physiquement séparés par une ou plusieurs couches intermédiaires. Dans le même esprit, le terme « entre » ne signifie pas nécessairement que trois éléments désignés sont en contact directs les uns avec les autres. De manière similaire, on emploie l'expression « formée sur » pour exprimer le fait qu'une couche est disposée d'un côté donné d'une autre couche. Cette expression n'implique pas que la couche considérée soit formée « directement » sur l'autre couche. D'autres couches intermédiaires peuvent être agencées entre ladite couche et l'autre couche.

D'un point de vue structurel, et de manière connue, l'empilement électrochrome comprend les deux électrodes intercalées entre les deux couches électro-conductrices transparentes. Au moins une de ces électrodes est constituée d'un matériau électrochrome qui, par définition, est adapté pour insérer réversiblement et simultanément des ions et des électrons, les états d'oxydation correspondant aux états insérés et désinsérés étant de coloration distincte, un des états présentant une transmission lumineuse plus élevée que l'autre. La réaction d'insertion ou de désinsertion est commandée au moyen des deux couches conductrices transparentes dont l'alimentation électrique est assurée par un générateur de courant ou un générateur de tension.

L'électrode de travail est constituée d'un matériau électrochrome cathodique adapté pour capter des ions lorsqu'une tension est appliquée aux bornes du système électrochrome. L'état teinté de l'électrode de travail correspond à son état le plus réduit.

La contre-électrode est capable elle aussi d'insérer de façon réversible des cations, symétriquement par rapport à l'électrode de travail. En d'autres termes, cette contre-électrode est ainsi adaptée pour céder des ions lorsqu'une tension est appliquée aux bornes du système électrochrome. Cette contre-électrode est constituée d'une couche neutre en coloration, ou du moins peu colorée quand l'électrode de travail est à l'état clair, et présente de manière préférentielle une coloration à l'état oxydé de sorte à augmenter le contraste total de l'empilement électrochrome, entre son état teinté et son état clair.

L'électrode de travail et la contre-électrode sont séparées par une région interfaciale communément appelée « electrolyte » (en langue anglaise : Ion-Conductor (IC)) ayant une double fonction de conducteur ionique et d'isolant électrique. La couche à conduction ionique empêche donc tout court-circuit entre l'électrode de travail et la contre-électrode. Elle permet de plus aux deux électrodes de retenir une charge et de maintenir ainsi leurs états clair et teinté.

Selon un mode de réalisation particulier, la couche de conducteur ionique est formée par dépôt entre l'électrode de travail et la contre-électrode d'une couche intermédiaire distincte. Les limites entre ces trois couches sont définies par des changements brusques de composition et/ou de microstructure. De tels empilements électrochromes ont donc au moins trois couches distinctes séparées par deux interfaces abruptes distinctes. La couche de conducteur ionique peut être sous la forme d'une solution gélifiée et/ou d'un polymère conducteur ionique et/ou d'une ou plusieurs couche(s) minérale(s) déposée(s) par pulvérisation cathodique magnétron, CVD ou procédé sol-gel.

De manière alternative, l'électrode de travail et la contre-électrode sont déposées l'une au-dessus de l'autre et généralement en contact l'une avec l'autre, et une région de transition ayant fonction d'électrolyte n'est formée qu'ultérieurement, par migration de composants au sein des électrodes au cours du processus de fabrication et en particulier au cours des phases de chauffe de l'empilement.

Lesdites première et deuxième couches conductrices transparentes du le dispositif fonctionnel électrochimique peuvent inclure un ou plusieurs revêtements conducteurs transparents tels que SnO2:F ou ITO.

De préférence, ici, l'empilement électrochrome 2 est directement en contact avec ledit substrat 1.

En variante, une ou plusieurs couches intermédiaires peuvent être agencées entre le substrat 1 et l'empilement électrochrome 2.

Le substrat à fonction verrière peut notamment être constitué de tout matériau adapté à la fabrication de vitrage. Il peut notamment s'agir d'un matériau vitrifié, de verre ou d'un matériau plastique adapté.

Le substrat peut être trempé ou non. Il peut présenter n'importe quelle épaisseur. Il peut présenter toute caractéristique optique ; notamment être teinté ou non.

De préférence, le revêtement 3 de contrôle chromatique est directement en contact avec ledit substrat 1 et délimite la face externe 41 du système optique 40.

En variante, une ou plusieurs couches intermédiaires peuvent être agencées entre le substrat 1 et le revêtement 3.

Le revêtement 3 forme dans tous les cas la face externe 41 du système optique 40.

Le système optique selon l'invention est particulièrement intéressant pour le développement d'un système optique qui subirait une trempe après dépôt de l'empilement électrochrome 2 et du revêtement 3. Le revêtement 3 est alors de préférence adapté à résister à la trempe.

Le système optique comporte également de préférence un empilement électrochrome adapté à résister aux étapes de trempe. Une couche protectrice de l'empilement électrochrome peut éventuellement être ajoutée.

La couleur, ou l'état chromatique de l'ensemble optique 50 ou du système optique 40 seront par la suite décrit dans l'espace colorimétrique connu CIE L*a*b*, communément appelé CIE LAB, dans lequel :

- la composante L* est la clarté, et est mesurée de 0 (noir) à 100 (blanc),
- la composante a* représente une gamme de 600 niveaux sur un axe allant de la couleur verte (-300) à la couleur rouge (+299),

- la composante b* représente une gamme de 600 niveaux sur un axe allant de la couleur bleu (-300) à la couleur jaune (+299).

Les composantes a* et b* d'un tel espace colorimétrique sont par exemple représentées sur la figure 6.

L'ensemble optique 50 comprenant le substrat 1 et le dispositif fonctionnel électrochimique présente un état chromatique initial avec une valeur initiale de chromaticité (L*ui ; a*ui ; b*ui) en réflexion selon l'angle de réflexion u du côté du substrat. Cet ensemble optique 50 est représenté schématiquement sur la figure 4. Les coordonnées (a*ui ; b*ui) sont les coordonnées chromatiques initiales de la valeur initiale de chromaticité en réflexion de l'ensemble optique 50 selon l'angle de réflexion u.

Un faisceau lumineux LI incident sur l'ensemble optique 50 du côté du substrat 1 est partiellement réfléchi. La réflexion globale de ce faisceau incident comprend un faisceau lumineux LRi(u) réfléchi selon l'angle u.

Ce faisceau lumineux LRi(u) réfléchi selon l'angle u comporte principalement une composante LR1 réfléchie sur l'interface air/substrat, c'est-à-dire sur une face externe de l'ensemble optique 50 et une composante LR2 réfléchie sur l'interface entre le dispositif fonctionnel électrochrome et le substrat 1. Le faisceau lumineux LRi(u) réfléchi selon l'angle u présente un spectre initial SI.

Le système optique 40 selon l'invention présent un état chromatique final avec une valeur finale de chromaticité (L*uf ; a*uf ; b*uf) en réflexion selon cet angle de réflexion u. Les coordonnées (a*uf ; b*uf) sont les coordonnées chromatiques finales de la valeur finale de chromaticité en réflexion du système optique 40 selon l'angle de réflexion u.

Le faisceau lumineux LI incident sur le système optique 40 du côté du revêtement 3 est partiellement réfléchi. La réflexion globale de ce faisceau incident comprend un faisceau lumineux LRf(u) réfléchi selon l'angle u.

Ce faisceau lumineux LRf(u) réfléchi selon l'angle u comporte une composante LRC réfléchie au niveau du revêtement de contrôle chromatique 3. En raison de l'épaisseur nanométrique de ce revêtement 3, il est communément admis de ne considérer qu'une unique réflexion liée à ce revêtement 3. Il comprend en outre la composante LR2 réfléchie sur l'interface entre le dispositif fonctionnel électrochrome et le substrat 1.

Le faisceau lumineux LRf(u) réfléchi selon l'angle u présente un spectre final SF.

De manière remarquable, l'état chromatique final du système optique 40 est plus proche que l'état chromatique initial de l'ensemble optique 50 d'un état chromatique de référence présentant une valeur de référence de chromaticité (L*uref ; a*uref ; b*uref) audit angle de réflexion u.

De manière générale, la valeur choisie de chromaticité de référence (a*uref ; b*uref) correspond à une couleur particulière à obtenir en réflexion, que cela soit sur le fondement de motivations d'ordre technique et/ou esthétique. Les coordonnées (a*uref ; b*uref) sont les coordonnées chromatiques de référence de la valeur de référence de chromaticité en réflexion de l'ensemble optique 50 selon l'angle de réflexion u.

Dans l'espace colorimétrique CIELAB, la distance de chromaticité initiale Cui entre les coordonnées chromatiques initiales (a*ui; b*ui) et les coordonnées chromatiques de référence (a*uref ; b*uref) selon l'angle de réflexion u satisfait l'équation suivante :

[Math.6]

$$Cui = \sqrt{(a*ui - a*uref)^2 + (b*ui - b*uref)^2}$$

La distance de chromaticité finale Cuf entre les coordonnées chromatiques finales (a*uf; b*uf) et les coordonnées chromatiques de référence (a*uref ; b*uref) selon l'angle de réflexion u satisfait l'équation suivante :

[Math.7]

$$Cuf = \sqrt{(a*uf - a*uref)^2 + (b*uf - b*uref)^2}$$

Ainsi, l'état chromatique final du système optique 40 est tel une variation ΔCu de distance chromatique (Cui, Cuf) entre la valeur initiale de chromaticité et la valeur de référence d'une part et entre la valeur finale de chromaticité et la valeur de référence de chromaticité d'autre part inférieure à 0 à l'angle de réflexion prédéterminé u, soit

[Math.8]

$$\Delta Cu = Cuf - Cui$$
$$= \sqrt{(a*uf - a*uref)^2 + (b*uf - b*uref)^2}$$
$$- \sqrt{(a*ui - a*uref)^2 + (b*ui - b*uref)^2} < 0$$

Ainsi, dans l'exemple illustré par la Figure 6, la valeur mesurée à l'état clair de chromaticité initiale en réflexion (a*ui ; b*ui) d'un ensemble optique 50 est de (-10,4805 ; 10,9183), ce qui correspond à une couleur jaune-vert. Cette valeur est représentée ici par un carré. A noter que selon d'autres modes de réalisation, cette valeur de chromaticité initiale (a*ui ; b*ui) en réflexion selon l'angle de réflexion u peut varier sur l'ensemble du spectre visible, sans s'éloigner de l'esprit de l'invention.

La valeur de chromaticité de référence se rapporte à une couleur de référence que l'on cherche à obtenir. Elle se distingue de la « couleur finale » du système optique 40 en réflexion selon l'angle u qui correspond à la valeur de chromaticité finale (a*uf ; b*uf). Elle dépend ici de la valeur de chromaticité initiale de l'ensemble optique en réflexion à l'angle u et de la valeur de chromaticité du revêtement 3, c'est-à-dire de la couleur en réflexion de ce revêtement.

La distance de chromaticité initiale Cui correspond à la norme du vecteur allant du point de chromaticité initiale (a*ui ; b*ui) au point choisi de chromaticité de référence (a*uref ; b*uref) dans l'espace colorimétrique représenté sur la figure 6.

De manière similaire, la distance de chromaticité finale Cuf correspond à la norme du vecteur allant du point de chromaticité finale (a*uf ; b*uf) au point choisi de chromaticité de référence (a*ref ; b*ref) dans l'espace colorimétrique représenté sur la figure 6.

Dans l'exemple plus particulièrement décrit ici, la valeur de chromaticité de référence (a*ref ; b*ref) correspond à une couleur vert-bleu. Cependant, selon d'autres modes de réalisation, cette valeur de chromaticité de référence (a*ref ; b*ref) en réflexion selon l'angle de réflexion u peut varier sur l'ensemble du spectre visible, sans s'éloigner de l'esprit de l'invention.

Selon l'invention telle que revendiquée, au moins 30%, préférentiellement au moins 40%, préférentiellement au moins 50%, préférentiellement au moins 60%, préférentiellement au moins 70%, préférentiellement au moins 80% de l'intensité lumineuse totale de la réflexion globale sur le système optique 40 à l'angle de réflexion u est réalisée par la réflexion par ledit revêtement 3 de contrôle chromatique.

En d'autres termes, le faisceau lumineux LRC réfléchi par le revêtement 3 est de préférence la principale composante du faisceau lumineux globalement réfléchi par le système optique 40.

En conséquence, les inhomogénéités de couleur réfléchie due aux petites variations d'épaisseurs dans l'empilement électrochrome sont ainsi limitées.

En outre, en choisissant les caractéristiques optiques du revêtement de manière appropriée, de manière à ce que la réflexion sur ce revêtement constitue la plus grande partie du faisceau réfléchi, il est possible d'une part d'imposer une couleur prédéterminée au système optique en réflexion, et d'autre part de limiter les variations de couleurs réfléchies en fonction de l'angle de réflexion.

Même avec un coefficient de réflexion dans l'air faible, le revêtement 3 peut permettre de modifier la couleur observée en réflexion s'il est suffisamment coloré.

On a représenté sur la figure 7 un graphique illustrant, d'une part, l'évolution du coefficient de réflexion globale Rtot de la lumière sur le système optique 40 selon l'invention en fonction du coefficient de réflexion Rout de la lumière sur le revêtement 3 de contrôle chromatique en réflexion et, d'autre part, l'évolution de la contribution de ce coefficient de réflexion Rout de la lumière sur le revêtement 3 de contrôle chromatique en réflexion dans la réflexion globale de la lumière sur le système optique 40 en fonction du coefficient de réflexion Rout de la lumière sur le revêtement 3 de contrôle chromatique en réflexion. Ces représentations sont faites pour différentes valeurs du coefficient de réflexion Rin de la lumière sur l'interface entre le substrat 1 et l'empilement électrochrome 2.

On définit ici le coefficient de réflexion globale Rtot comme le rapport des intensités du faisceau lumineux réfléchi LRf et du faisceau lumineux incident LI.

On définit ici le coefficient de réflexion Rout de la lumière sur le revêtement 3 de contrôle chromatique en réflexion comme le rapport des intensités du faisceau lumineux réfléchi LRC par le revêtement 3 et du faisceau lumineux incident LI.

Le coefficient de réflexion Rin de la lumière sur l'interface entre le substrat et l'empilement électrochrome est défini comme le rapport des intensités du faisceau lumineux réfléchi LR2 par cette interface et du faisceau lumineux incident LI.

En l'absence du revêtement 3, le coefficient de réflexion sur l'interface air/substrat est environ égale à 4% et est non coloré. Les coordonnées (a*ui, b*ui) sont alors proches de (0, 0). Cette réflexion neutralise partiellement la couleur du faisceau lumineux réfléchi par l'interface entre le substrat 1 et l'empilement électrochrome 2.

Dans le cas par exemple d'un ensemble optique tel qu'intégré dans un vitrage SageGlass® formant l'ensemble optique 50, le coefficient de réflexion Rin à l'interface entre le substrat 1 et l'empilement électrochrome 2 est très faible, environ égal à 2%. Dans ces conditions, le coefficient de réflexion sur le revêtement Rout est égal à 5%, soit un coefficient de réflexion total Rtot d'environ 7%. La réflexion sur le revêtement 3 contribue ainsi à plus de 70% de la réflexion totale du système optique 40 formé par le revêtement 3 et l'ensemble optique 50.

Si le coefficient Rin est plus élevé, par exemple égal à 5%, le coefficient Rout doit être supérieur à 15%, pour un coefficient de réflexion total Rtot d'environ 20% pour assurer une contribution similaire.

Dans le système optique 40 selon l'invention, le coefficient de réflexion de la lumière à l'interface air/ substrat est modifié par l'ajout du revêtement 3.

La modification du faisceau lumineux réfléchi LRi(u, λ) par l'ensemble optique 50 à l'angle de réflexion u, pour la longueur d'onde λ, pour obtenir le faisceau réfléchi LRf(u, λ) par le système optique 40 selon l'invention, à l'angle de réflexion u, pour la longueur d'onde λ entraîne la variation ΔCu(λ) de cette distance de chromaticité entre la valeur de chromaticité initiale (a*ui ; b*ui) et une valeur de chromaticité en réflexion (a*u(λ) ; b*u(λ)) après modification de la réflexion à la longueur d'onde λ.

Les coordonnées (a*u(λ) ; b*u(λ)) sont les coordonnées chromatiques de la valeur de chromaticité en réflexion selon l'angle de réflexion u obtenue suite à la variation de réflexion réalisée à ladite longueur d'onde λ.

On note Cu(λ) la distance chromatique entre ces coordonnées chromatiques (a*u(λ) ; b*u(λ))) et les coordonnées chromatiques de ladite valeur de référence de chromaticité en réflexion (a*uref ; b*uref) selon l'angle de réflexion u.

Cette variation de distance de chromaticité exprime le fait que la couleur du système optique 40 en réflexion est plus proche de la couleur de référence souhaitée que la couleur de l'ensemble optique 50 sans revêtement de contrôle de chromaticité en réflexion. Cette variation ΔCu(λ) satisfait l'équation suivante :

[Math.9]

$$
\Delta Cu(\lambda) = Cu(\lambda) - Cui
$$
$$
= \sqrt{(a*u(\lambda) - a*uref)^2 + (b*u(\lambda) - b*uref)^2}
$$
$$
- \sqrt{(a*ui - a*uref)^2 + (b*ui - b*uref)^2}
$$

A cet fin, le spectre du faisceau lumineux réfléchi LRC par le revêtement 3 de contrôle chromatique en réflexion à l'angle de réflexion u comporte au moins une composante spectrale située dans une plage de longueurs d'onde de réflexion effective ([λmin ; λmax]), ladite plage de longueurs d'onde de réflexion effective [λmin ; Amax] étant définie de sorte qu'une modification de la réflexion par l'ensemble optique 50 d'une quantité quelconque de lumière à une longueur d'onde λ comprise dans ladite plage de réflexion effective [λmin ; λmax] engendre une variation ΔCu(λ) de distance chromatique Cui, Cu(λ) inférieure à 0 à l'angle de réflexion prédéterminé (u) : ΔCu(λ)<0.

Ladite plage de longueurs d'onde de réflexion effective peut notamment comprendre une unique plage de longueurs d'onde continue ou une pluralité de plages de longueurs d'onde séparées les unes des autres. Cette pluralité de plages de longueurs d'onde forme un ensemble de plages de longueurs d'onde optimal.

Ainsi, l'agencement du revêtement 3 de contrôle chromatique en réflexion sur la face principale 12 du substrat 1 opposée à la face principale 11 sur laquelle est formé le dispositif fonctionnel électrochrome 2 modifie le spectre de la réflexion globale sur l'ensemble optique 50. Plus particulièrement, ce spectre de la réflexion globale sur l'ensemble optique 50 est modifié pour obtenir le spectre de la réflexion globale sur le système optique selon l'invention.

Selon un mode de réalisation, à l'angle de réflexion u, le faisceau lumineux réfléchi LRC par le revêtement 3 présente une plus grande quantité de lumière à au moins une longueur d'onde λ comprise dans ladite plage de réflexion effective [λmin ; λmax]. Cette plage de réflexion effective est déterminée de telle sorte que l'augmentation de la quantité de lumière réfléchie ayant une longueur d'onde comprise dans cette plage entraîne une variation de la valeur de chromaticité à l'angle de réflexion u rapprochant cette valeur de la valeur de chromaticité de référence. En d'autres termes, l'augmentation de la quantité de lumière réfléchie ayant une longueur d'onde comprise dans cette plage entraîne une variation de couleur observée à l'angle u rapprochant la couleur du système optique obtenu de la couleur de référence.

On entend ici par « augmentation de la quantité de lumiè-re » une augmentation de l'intensité lumineuse à la longueur d'onde λ en question.

Selon un autre mode de réalisation, à l'angle de réflexion u, les faisceaux lumineux réfléchis par le revêtement 3, en particulier le faisceau réfléchi LRC par le revêtement 3 présente une moins grande quantité de lumière à au moins une longueur d'onde λ comprise dans ladite plage de réflexion effective [λmin ; λmax]. Cette plage de réflexion effective est déterminée de telle sorte que la diminution de la quantité de lumière réfléchie ayant une longueur d'onde comprise dans cette plage entraîne une variation de la valeur de chromaticité à l'angle de réflexion u rapprochant cette valeur de la valeur de chromaticité de référence. En d'autres termes, la diminution de la quantité de lumière réfléchie ayant une longueur d'onde comprise dans cette plage entraîne une variation de couleur observée à l'angle u rapprochant la couleur du système optique obtenu de la couleur de référence.

On entend ici par « diminution de la quantité de lumière » une diminution de l'intensité lumineuse à la longueur d'onde λ en question.

Une valeur ΔCu(λ) négative exprime une variation de chromaticité en réflexion selon l'angle u, à la longueur d'onde λ, après ajout du revêtement 3 à l'ensemble optique 50, permettant de rapprocher la chromaticité initiale de celle souhaitée, la chromaticité obtenue étant plus « proche » de la chromaticité de référence souhaitée que la chromaticité initiale. Au contraire, l'obtention d'une valeur ΔCu(λ) positive exprime un éloignement de la chromaticité souhaitée, c'est-à-dire de la chromaticité de référence, par rapport à la chromaticité initiale

Au regard de l'espace colorimétrique CIE L*a*b* illustré par la figure 6, une valeur de Δa*u négative témoigne d'une variation chromatique vers le vert à l'angle de réflexion u tandis qu'une valeur de Δa*u positive se réfère à une variation chromatique vers le rouge à l'angle de réflexion u. Suivant le même raisonnement, une valeur de Δb*u négative témoigne d'une variation chromatique vers le bleu à l'angle de réflexion u tandis qu'une valeur de Δa*u positive se réfère à une variation chromatique vers le jaune à l'angle de réflexion u.

Des variations chromatiques en réflexion (Δa*u(λ) ; Δb*u(λ)) à l'angle de réflexion u peuvent respectivement se définir selon les équations suivantes :

$$\Delta a^*u(\lambda) = a^*u(\lambda) - a^*ui$$

et

$$\Delta b^*u(\lambda) = b^*u(\lambda) - b^*ui.$$

Au regard de ces deux équations, de celle déjà mentionnée définissant ΔCu(λ), et des valeurs connues de a*ui, a*uref, b*ui et b*uref, il est aisé de calculer la variation ΔCu(λ) de distance de chromaticité résultant de l'ajout du revêtement 3.

Ainsi, on détermine par exemple la plage d'absorption effective [λmin ; λmax] dans laquelle une variation de réflexion d'une quantité quelconque de lumière à une longueur d'onde λ comprise dans ladite plage d'absorption effective [λmin ; λmax] engendre une modification de la chromaticité initiale à l'angle u vers la chromaticité de référence à l'angle u ou en d'autres termes, une variation ΔCu(λ) de distance de chromaticité (Cui, Cu(λ)) inférieure à 0.

Au regard des variations chromatiques en réflexion (Δa*u(λ) ; Δb*u(λ)) observée par l'ajout du revêtement 3 sur l'ensemble optique 50 en fonction des longueurs d'onde de réflexion, il peut être déterminé la plage de réflexion effective [λmin ; λmax] satisfaisant ce critère.

De préférence, l'intensité lumineuse des composantes spectrales du faisceau réfléchi LRC par le revêtement 3 de contrôle chromatique à l'angle de réflexion u comprises dans ladite plage de longueurs d'onde de réflexion effective [λmin ; λmax] constituent au moins 50%, préférentiellement au moins 55%, préférentiellement au moins 60%, préférentiellement au moins 65%, préférentiellement au moins 70%, préférentiellement au moins 75%, préférentiellement au moins 80%, préférentiellement au moins 85%, préférentiellement au moins 90% de l'intensité lumineuse totale du faisceau réfléchi LRC à l'angle de réflexion u par ledit revêtement 3 de contrôle chromatique. Ainsi, la modification de la réflexion du faisceau lumineux incident est réalisée de manière efficace.

Une condition similaire pourrait également être imposée pour tout angle de réflexion considéré.

Par ailleurs, la modification de la réflexion du faisceau incident grâce au revêtement 3 de contrôle chromatique peut égalenierit permettre de limiter la dépendance angulaire de la couleur observée en réflexion.

Ainsi, l'état chromatique initial de l'ensemble optique 50 présente généralement une valeur initiale de chromaticité (a*vi ; b*vi) en réflexion selon un autre angle de réflexion v différent de l'angle de réflexion u qui est différente de la valeur initiale de chromaticité (a*ui ; b*ui) en réflexion selon cet angle de réflexion u. Les coordonnées chromatiques initiales (a*vi ; b*vi) sont les coordonnées chromatiques de la valeur initiale de chromaticité en réflexion sur l'ensemble optique 50 selon l'autre angle de réflexion v.

Une distance chromatique initiale est définie entre ladite valeur initiale de chromaticité (a*ui ; b*ui) observée audit angle de réflexion u et la valeur initiale de chromaticité (a*vi ; b*vi) observée audit autre angle de réflexion v.

Selon l'invention telle que revendiquée, le revêtement 3 de contrôle chromatique en réflexion est adapté pour que le système optique 40 selon l'invention présente un état chromatique final avec une valeur finale de chromaticité (a*vf ; b*vf) en réflexion selon cet autre angle de réflexion v telle qu'une distance chromatique finale Cang(u,v)f entre ladite valeur finale de chromaticité (a*uf ; b*uf) observée audit angle de réflexion u et la valeur finale de chromaticité (a*vf ; b*vf) observée audit autre angle de réflexion v est inférieure à ladite distance chromatique initiale Cang(u,v)i entre ladite valeur initiale de chromaticité (a*ui ; b*ui) observée audit angle de réflexion u et la valeur initiale de chromaticité (a*vi ; b*vi) observée audit autre angle de réflexion v.

Les coordonnées chromatiques finales (a*vf ; b*vf) sont les coordonnées chromatiques de la valeur finale de chromaticité en réflexion selon l'autre angle de réflexion v.

Cela correspond à une variation ΔCang(u,v) de distance chromatique entre la distance chromatique initiale Cang(u,v)i entre les valeurs initiales de chromaticité audits angles de réflexion distinct considérés, d'une part, et la distance chromatique finale Cang(u,v)f entre les valeurs finales de chromaticité audits premier et deuxième angle de réflexion, d'autre part, inférieure à 0, soit :

[Math.10]

$$\Delta Cang(u,v) = Cang(u,v)f - Cang(u,v)i$$
$$= \sqrt{(a*uf - a*vf)^2 + (b*uf - b*vf)^2}$$
$$- \sqrt{(a*ui - a*vi)^2 + (b*ui - b*vi)^2} < 0$$

Ledit revêtement 3 de contrôle chromatique comprend au moins une couche d'un matériau présentant des propriétés de réflexion dans l'air telles que le faisceau lumineux réfléchi LRC par ce revêtement 3 présente un état chromatique prédéterminé et/ou une variation de valeur chromatique en fonction de l'angle de réflexion inférieure à une valeur seuil prédéterminée.

En particulier, ledit revêtement 3 est déterminé pour que sa couleur, ou, en d'autres termes, son état chromatique soit plus proche de la couleur de référence que celle de l'ensemble optique à modifier et pour que la dépendance angulaire de cette couleur du revêtement 3 soit plus faible que la dépendance angulaire de la couleur en réflexion de l'ensemble optique 50, c'est-à-dire pour que la variation de valeur chromatique du revêtement 3 en fonction de l'angle de réflexion soit plus faible que la variation de valeur chromatique en fonction de l'angle de réflexion de l'ensemble optique 50.

Dans l'exemple détaillé ici, l'état chromatique prédéterminé du faisceau lumineux réfléchi LRC par le revêtement 3 de contrôle chromatique en réflexion est tel que a* et b* sont inférieurs strictement à zéro au moins sur une plage prédéterminée (u1, u2) d'angles de réflexion u.

Cela permet ici de modifier la couleur initiale jaune-vert de l'ensemble optique vers une couleur bleu-vert.

En outre, l'état chromatique prédéterminé du faisceau lumineux réfléchi LRC par le revêtement 3 de contrôle chromatique en réflexion est tel que la distance C*(0°-60°) entre les valeurs de chromaticité aux arigles de réflexion de 0° et 60° est inférieure à 5. La variation de valeur de chromaticité en fonction de l'angle de réflexion peut ainsi être quantifiée par une distance chromatique en réflexion entre des valeurs de chromaticité à différents angles de réflexion. Cette distance chromatique en fonction de l'angle de réflexion est inférieure à une valeur seuil prédéterminée, ici égale à 5. La valeur seuil prédéterminée pourrait également être prise égale à toute valeur inférieure à 8.

A titre de comparaison, certains substrats muni d'un empilemerit électrochrome de l'état de la technique présente une distance C*(0°-60°) entre les valeurs de chromaticité aux angles de réflexion de 0° et 60° approximativement égale à 12,7 à 1 près.

On utilise ici les valeurs de distance entre les valeurs de chromaticité aux angles de réflexion de 0" et 60°, mais d'autres valeurs de distance entre les valeurs de chromaticité à différents angles de réflexion peuvent être utilisées, par exemple entre 8 et 60°. On estime qu'une variation de couleur est perçue par l'œil humain lorsque la distance entre les valeurs de chromaticité à deux angles de réflexion différents est supérieure ou égale à 2.

Selon un mode de réalisation du système optique 40 selon l'invention, ledit revêtement 3 de contrôle chromatique comprend au moins une couche d'épaisseur comprise entre 1 et 80 nanomètres d'au moins un matériau parmi les suivants :

- oxyde de silicium, de titane, de zirconium, de Hafnium ou d'étain MOx avec x entre 1 et 3, préférentiellement entre 1,5 et 2,5, M étant l'un des composés suivants : Si, Ti, Zr, Hf, Sn ;
- oxyde de niobium NbOx avec x entre 1,5 et 3,5, préférentiellement entre 2 et 3 ;
- nitrure de niobium, de titane, de zirconium, de Hafnium MNx avec x entre 0 et 2, préférentiellement entre 0,5 et 1,5, M étant l'un des composés suivants : Nb, Ti, Zr, Hf ;
- nitrure de silicium SiNx avec x entre 0,7 et 2, préférentiellement entre 1 et 1,7 ;
- nitrure d'étain SnNx avec x entre 0 et 1,5, préférentiellement entre 0,3 et 1 ;
- oxynitrure de titane, de zirconium ou de Hafnium MOxNy avec x entre 0 et 2,2 et y entre 0 et 1,2, M étant l'un des composés suivants : Ti, Zr, Hf ;
- oxynitrure de silicium ou d'étain MOxNy avec x entre 0 et 2,2 et y entre 0 et 1,5, M étant l'un des composés suivants : Si, Sn ;
- oxynitrure de niobium NbOxNy avec x entre 0 et 2,7 et y entre 0 et 1,2 ;

- oxynitrure de deux composés M1 et M2 M1M2aOxNy avec a entre 0 et 1, x entre 0 et 4,4, y entre 0 et 2,4, M1 et M2 étant l'un des composés suivants : Ti, Zr, Hf ;
- oxynitrure d'étain et zirconium SnZnaOx avec a entre 0 et 1,2 et x entre 0 et 3,5, préférentiellement entre 1,8 et 3,2.

En particulier, le revêtement 3 comporte de préférence au moins une couche de l'un des composés chimiques suivants : SiO2, TiO2, Nb2O5, Si3N4, ZrO2, TiZrO4, SnO2, SnZnO3, TiN, NbN, SiOxNy, HfO2, HfN, SnN, TiOxNy, NbOxNy, TiZrOxNy.

De manière générale, le revêtement 3 comprend une couche d'un matériau à haut indice de réfraction n, par exemple avec un indice supérieur à 1,8, ou une alternance de couches de matériaux à haut et bas indices. Un matériau à bas indice présente un indice inférieur à 1,8. L'épaisseur de chaque couche est inférieure à 80 nanomètres, de préférence inférieure à 70 nanomètres, de préférence inférieure à 60 nanomètres, de préférence inférieure à 50 nanomètres, de préférence inférieure à 40 nanomètres. L'épaisseur totale du revêtement est inférieure à 90 nanomètres, de préférence inférieure à 80 nanomètres, de préférence inférieure à 70 nanomètres, de préférence inférieure à 60 nanomètres, de préférence inférieure à 50 nanomètres, de préférence inférieure à 40 nanomètres.

De manière générale, la mise en œuvre, au sein du revêtement 3, de couches de faible épaisseur, c'est-à-dire d'épaisseur inférieure à 100 nm, préférentiellement moins, présente plusieurs avantages techniques en comparaison avec des couches dites « épaisses », d'épaisseur plus importante.

Il convient en effet de noter que les incertitudes liées au processus de dépôt des couches varient avec l'épaisseur de ces dernières. Dans la pratique, de telles incertitudes sont ainsi exprimées en un pourcentage donné (typiquement 5 ou 10%) de l'épaisseur de la couche à déposer. Lorsque l'épaisseur de cette couche augmente, les variations éventuelles d'épaisseur augmentent également en valeurs absolues, et inversement. En d'autres termes, il est relativement plus complexe de déposer de manière uniforme une couche dite « épaisse ». Le dépôt d'une couche de faible épaisseur est donc un processus qui souffre de moins de fluctuations, et est donc plus stable.

Or, toute variation même minime de l'épaisseur d'une couche engendre une variation non négligeable de son rendu chromatique en réflexion. Lorsque considérée dans son ensemble, une couche dite « épaisse » présente donc un plus grand nombre de variations chromatiques en réflexion.

Par opposition, le dépôt de couches de faible épaisseur permet de limiter ces variations chromatiques, et donc d'offrir un rendu relativement plus homogène en réflexion.

Ceci est d'autant plus vrai lorsque l'observateur change d'angle, d'observation, l'homogénéité chromatique « radiale » d'une couche étant très sensible à ces variations locales d'épaisseurs.

En particulier, le revêtement 3 peut comprendre une unique couche de l'un de ces matériaux, ou il peut comprendre une pluralité de couches de ces matériaux, alternés. En particulier, il peut comprendre une ou plusieurs couches de nitrure de silicium SiNx et d'oxyde de silicium SiOx, ou une ou plusieurs couches d'oxyde de titane TiOx et d'oxyde de silicium SiOx.

Chacun de ces matériaux présente des caractéristiques de résistance suffisante aux conditions environnementales telles que l'humidité ou les frottements et résiste également à un chauffage à des températures appropriées pour la trempe du système optique.

En particulier, dans le cadre de l'exemple décrit ici, les caractéristiques de différents revêtements 3 de contrôle chromatique possibles ont été déterminés par modélisation optique. Ces revêtements 3 remplissent les critères énoncés précédemment : il présente un état chromatique en réflexion avec coordonnées chromatique telle que a*<0 and b*<0 et une dépendance angulaire chromatique faible avec par exemple une distance chromatique entre les valeurs chromatiques observée à 0 et 60° d'angle de réflexion inférieure à 5, soit C*(0°-60°) < 5.

Selon un mode de réalisation, le revêtement 3 peut comprendre une couche de nitrure de silicium SiNx d'épaisseur comprise entre 1 et 65 nanomètres qui présente un état chromatique tel que a*<0 et b*<0. Le coefficient de réflexion Rtot d'un substrat en verre recouvert de ce revêtement est compris entre 8 et 22%, avec un coefficient de réflexion Rout sur le revêtement compris entre 0% et 18%. La dépendance angulaire entre 0° et 60° est inférieure à 3, soit C*(0-60°) < 3.

Selon un autre mode de réalisation, le revêtement 3 peut comprendre une couche de dioxyde de titane TiO2 d'épaisseur comprise entre 25 et 55 nanomètres, qui présente un état chromatique tel que a*<0 et b*<0. Le coefficient de réflexion Rtot d'un substrat en verre recouvert de ce revêtement est compris entre 21,5% et 34,5%, avec un coefficient de réflexion Rout sur le revêtement compris entre 19% et 32%. La dépendance angulaire entre 0° et 60° est inférieure à 4, soit C*(0°-60°) < 4.

Selon un autre mode de réalisation, le revêtement 3 comprend une couche d'oxyde de titane TiOx et une couche d'oxyde de silicium SiOx.

Les combinaisons d'épaisseurs d'oxyde de titane TiOx et d'oxyde de silicium SiOx qui présente un état chromatique tel que a*<0 et b*<0 avec une dépendance angulaire entre 0° et 60° inférieure à 5, soit C*(0°-60°) < 5 sont représentées graphiquement sur la figure 8.

Cette figure 8 montre également schématiquement les coefficients de réflexion Rtot sur le revêtement obtenu déposé sur un substrat de verre.

Un revêtement présentant des caractéristiques particulièrement avantageuses est obtenu avec une couche de 15 nanomètres d'oxyde de titane TiOx et une couche de 45 nanomètres d'oxyde de silicium SiOx.

Selon un autre mode de réalisation, le revêtement 3 comprend une couche de nitrure de silicium SiNx et une couche d'oxyde de silicium SiOx.

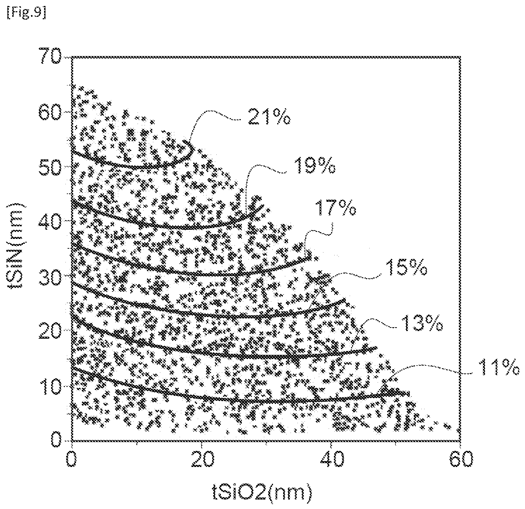

Les combinaisons d'épaisseurs de nitrure de silicium SiNx et une couche d'oxyde de silicium SiOx qui présente un état chromatique tel que a*<0 et b*<0 avec une dépendance angulaire entre 0° et 60° inférieure à 5, soit C*(0°-60°) < 5 sont représentées graphiquement sur la figure 9. Cette figure 9 montre également schématiquement les coefficients de réflexion Rtot sur le revêtement obtenu déposé sur un substrat de verre.

Un autre revêtement présentant des caractéristiques particulièrement avantageuses est obtenu avec une couche de 30 nanomètres de nitrure de silicium SiNx et une couche de 30 nanomètres d'oxyde de silicium SiOx.

D'autres revêtements peuvent être envisagés en faisant varier la composition chimique de chaque couche, leur épaisseur, leur nombre et leur agencement relatif.

Chaque couche du revêtement peut être agencée par différents moyens connus de l'homme du métier sur le substrat.

Il peut s'agir notamment d'un dépôt magnétron ou d'un dépôt par voie liquide.

L'invention concerne également un procédé de modification de la couleur destiné à être observée par un observateur en réflexion de l'ensemble optique 50 pour former le système optique 40 tel que décrit précédemment, ledit procédé modifiant la couleur depuis un état chromatique initial présentant une valeur initiale de chromaticité (L*ui ; a*ui ; b*ui) observée à un premier angle de réflexion u prédéterminé vers un état chromatique final présentant une valeur finale de chromaticité (L*uf ; a*uf; b*uf) observée à ce premier angle de réflexion u, cet état chromatique final étant plus proche que l'état chromatique initial d'un état chromatique de référence présentant une valeur de référence de chromaticité (L*uref ; a*uref ; b*uref) audit premier angle de réflexion u.

Ce procédé comprend au moins une étape de modification des propriétés de réflexion de l'ensemble optique 50 par agencement d'un revêtement 3 de contrôle chromatique en réflexion sur l'autre face principale 12 du substrat 1 dudit système optique 40 opposée à la face principale 11 sur laquelle est formé l'empilement électrochrome 2, de sorte que la variation $\Delta$Cu de distance chromatique (Cui, Cuf) entre la valeur initiale de chromaticité et la valeur de référence de chromaticité d'une part et entre la valeur finale de chromaticité et la valeur de référence de chromaticité d'autre part est inférieure à 0 à l'angle de réflexion u. Cette étape permet de rapprocher la couleur en réflexion du système optique d'une couleur de référence cible.

Ledit état chromatique initial présentant une distance chromatique initiale entre ladite valeur initiale de chromaticité (L*ui ;a*ui ; b*ui) observée à l'angle de réflexion u et une valeur initiale de chromaticité (L*vi ; a*vi ; b*vi) observée à un autre angle de réflexion v, ledit procédé comprend au moins une autre étape de modification des propriétés de réflexion dudit ensemble optique 50 de sorte que la variation $\Delta$Cang(u,v) de distance chromatique entre la distance chromatique initiale Cang(u,v)i entre les valeurs initiales de chromaticité audits premier et deuxième angle de réflexion d'une part et la distance chromatique finale Cang(u,v)f entre les valeurs finales de chromaticité audits premier et deuxième angle de réflexion d'autre part est inférieure à 0. Cette étape permet de limiter la variation de la couleur en réflexion du système optique avec l'angle de réflexion.

Les deux étapes de modification sont de préférence réalisées simultanément, par l'agencement, par exemple le dépôt, d'un unique revêtement 3 sur l'autre face principale 12 du substrat 1. On peut cependant envisager que différents revêtements sont formés successivement sur la face concernée du substrat, l'un au moins des revêtements ayant pour effet de rapprocher la couleur en réflexion du système optique de la couleur de référence cible et un autre au moins des revêtements ayant pour effet de limiter la variation de la couleur en réflexion du système optique avec l'angle de réflexion.

L'invention concerne également un procédé de fabrication d'un système optique tel que décrit précédemment. Ce procédé de fabrication comporte par exemple les étapes suivantes, de préférence dans cet ordre :

- fourniture du substrat 1,
- formation de l'empilement électrochrome 2 sur l'une des faces principales du substrat,
- formation du revêtement 3 sur l'autre face principale du substrat,
- préférentiellement, trempe du système optique obtenu.

Selon un autre mode de réalisation, le substrat est trempé avant formation de l'empilement électrochrome ou avant la formation du revêtement sur le substrat.

Pour la formation du revêtement 3, il est possible de prévoir par exemple les étapes suivantes.

Au cours d'une première étape, le spectre en réflexion de l'ensemble optique 50 est mesuré à l'aide d'un spectrophotomètre ou de tout autre dispositif connu à fonction équivalente.

Sur le fondement de cette mesure, la valeur de chromaticité initiale (a*ui ; b*ui) de l'ensemble optique 50 en réflexion selon l'angle de réflexion u est déterminée, par exemple à l'aide d'un espace colorimétrique connu tel que le système XYZ de la CIE 1931.

Par la suite, la distance de chromaticité initiale Cui entre cette valeur de chromaticité initiale en transmission (a*ui ; b*ui) et la valeur de chromaticité de référence (a*uref ; b*uref) en réflexion selon l'angle de réflexion u est déterminée.

On détermine ensuite la plage de longueur d'onde dans laquelle une variation de la quantité de lumière réfléchie entraînera une variation adéquate des coordonnées de chromaticité du système optique obtenu.

On détermine ensuite, par exemple à l'aide d'une modélisation optique mise en œuvre par ordinateur, le matériau et l'épaisseur du revêtement augmentant ou diminuant la quantité de lumière réfléchie dans ladite plage de longueur d'onde, produisant ainsi l'effet recherché sur les coordonnées chromatiques de l'état chromatique du système optique obtenu.

On forme le revêtement correspondant sur l'autre face 12 principale du substrat 1.

Selon un processus inversé dans le temps, il est également possible de déterminer, à partir du système optique final, sa valeur initiale de chromaticité (L*ui ; a*ui ; b*ui) en réflexion. Il suffit pour ce faire de procéder à une ablation du revêtement 3 extérieur, puis de procéder à une mesure du spectre en réflexion de l'ensemble optique ainsi dépourvu de son revêtement 3 extérieur.

Le système optique obtenu est de préférence plat, mais peut également être courbé.

Selon l'invention, le système optique décrit précédemment peut notamment être utilisé en tant que vitrage bâtiment, notamment vitrage extérieur de cloison interne ou de porte vitrée, en tant que vitrage équipant les cloisons internes ou les fenêtres de moyens de transport du type train, avion, voiture, bateau, en tant que vitrages d'écran de visualisation du type écran d'ordinateur ou de télévision, pour des objectifs d'appareils photographiques ou des protections de panneaux solaires.

En particulier, le système optique selon l'invention peut être incorporé dans différentes configurations de vitrage dans lequel les différents éléments optiques peuvent être organisés différemment pour former :

- un simple vitrage comprenant l'empilement électrochrome 2, le substrat 1. sous la forme d'une feuille de verre, et le revêtement 3, agencé de préférence pour placer l'empilement électrochrome 2 à l'intérieur du bâtiment et le revêtement à l'extérieur ;

- un double vitrage comprenant, préférentiellement depuis l'extérieur vers l'intérieur du bâtiment, le revêtement 3, le substrat 1. sous la forme d'une feuille de verre, l'empilement électrochrome 2, une lame de gaz inerte, un revêtement bas émissif et un autre substrat sous la forme d'une autre feuille de verre ;

- un triple vitrage comprenant, préférentiellement depuis l'extérieur vers l'intérieur du bâtiment, le revêtement 3, le substrat 1 sous la forme d'une feuille de verre, l'empilement électrochrome 2, une lame de gaz inerte, une feuille de verre, une lame de gaz inerte, un revêtement bas émissif et un autre substrat sous la forme d'une autre feuille de verre,

- un triple vitrage comprenant, préférentiellement depuis l'extérieur vers l'intérieur du bâtiment, une feuille de verre, un revêtement bas émissif, une lame de gaz inerte, le revêtement 3, le substrat 1 sous la forme d'une feuille de verre, l'empilement électrochrome 2, une lame de gaz inerte, et une troisième feuille de verre.

Dans toutes les configurations, le revêtement 3 est destiné à être tourné vers l'extérieur du bâtiment, et dans tous les cas positionné sur une face externe du système optique formé par l'ensemble optique 50 et le revêtement 3.

Dans toutes les configurations, le revêtement 3 est situé du côté du substrat opposé au côté sur lequel est formé l'empilement électrochrome.

Les valeurs décrites dans le présent texte ne doivent pas être comprises comme strictement limitées aux valeurs numériques citées. Au lieu de cela, sauf indication contraire, chaque valeur désigne à la fois la valeur exactement citée et une gamme de valeurs fonctionnellement équivalentes englobant cette valeur.

Bien que des modes de réalisation particuliers de la présente invention aient été illustrés et décrits, il est évident que divers autres changements et modifications peuvent être réalisés dans l'esprit et la portée de l'invention. Le présent texte est donc destiné à couvrir dans les revendications annexées toutes les modifications entrant dans le cadre de la présente invention.

La présente invention n'est pas limitée aux modes de réalisation décrits et représentés sur les différentes figures, mais l'homme du métier saura y apporter toute variante conforme à son esprit.

**Revendications**

1. Système optique (40) comprenant :

- un ensemble optique (50) comprenant

un substrat (1) à fonction verrière muni de première et deuxième faces principales (11, 12) opposées et un dispositif fonctionnel électrochimique à propriétés optiques et/ou énergétiques électrocommandables formé sur ladite première face principale (11), ce dispositif fonctionnel électrochimique comprenant au moins un empilement électrochrome (2) muni de :

une première couche conductrice transparente,
une électrode de travail agencée au-dessus de ladite première couche conductrice transparente,
une contre-électrode agencée au-dessus de ladite électrode de travail,
une seconde couche conductrice transparente agencée au-dessus de ladite contre-électrode,
des ions Lithium introduits au sein dudit empilement électrochrome, et, préférentiellement, une couche d'un conducteur ionique distincte intercalée entre l'électrode et la contre-électrode,

- un revêtement (3) de contrôle chromatique en réflexion formé sur ladite deuxième face principale (12) du substrat, et formant une face externe (41) dudit système optique (40), adapté pour que le système optique (40) présente un état chromatique final avec une valeur finale de chromaticité (L*uf ; a*uf ; b*uf) en réflexion du côté du revêtement (3), selon un premier angle de réflexion (u),

ledit ensemble optique (50) présentant, avant formation dudit revêtement (3) sur ladite deuxième face principale (12) du substrat, un état chromatique initial avec une valeur initiale de chromaticité (L*ui ; a*ui ; b*ui) en réflexion du côté de la deuxième face principale du substrat (1), selon ledit premier angle de réflexion (u),
ledit état chromatique final étant plus proche que l'état chromatique initial d'un état chromatique de référence présentant une valeur de référence de chromaticité (L*uref ;
a*uref ; b*uref) audit premier angle de réflexion (u), le rapprochement vers l'état chromatique de référence neutralisant la couleur de réflexion du système optique,
ce qui correspond à une variation ΔCu de distance chromatique (Cui, Cuf) entre la valeur initiale de chromaticité et la valeur de référence d'une part et entre la valeur finale de chromaticité et la valeur de référence d'autre part inférieure à 0 audit premier angle de réflexion prédéterminé (u), soit

[Math.11]

$$\Delta Cu = Cuf - Cui$$
$$= \sqrt{(a*uf - a*uref)^2 + (b*uf - b*uref)^2}$$
$$- \sqrt{(a*ui - a*uref)^2 + (b*ui - b*uref)^2} < 0$$

ledit revêtement (3) de contrôle chromatique comprenant au moins une couche d'épaisseur supérieure ou égale à 1 nanomètre, préférentiellement inférieure à 70 nanomètres, préférentiellement inférieure à 60 nanomètres, préférentiellement inférieure à 50 nanomètres, préférentiellement inférieure à 40 nanomètres, d'au moins un matériau parmi les suivants :

- $MO_x$ avec x entre 1 et 3, préférentiellement entre 1,5 et 2,5, M étant l'un des composés suivants : Si, Ti, Zr, Hf, Sn ;
- $NbO_x$ avec x entre 1,5 et 3,5, préférentiellement entre 2 et 3 ;
- $MN_x$ avec x entre 0 et 2, préférentiellement entre 0,5 et 1,5, M étant l'un des composés suivants : Nb, Ti, Zr, Hf;
- $SiN_x$ avec x entre 0,7 et 2, préférentiellement entre 1 et 1,7 ;
- $SnN_x$ avec x entre 0 et 1,5, préférentiellement entre 0,3 et 1 ;
- $MO_xN_y$ avec x entre 0 et 2,2 et y entre 0 et 1,2, M étant l'un des composés suivants : Ti, Zr, Hf ;
- $MO_xN_y$ avec x entre 0 et 2,2 et y entre 0 et 1,5, M étant l'un des composés suivants : Si, Sn ;
- $NbO_xN_y$ avec x entre 0 et 2,7 et y entre 0 et 1,2 ;
- $M1M2aO_xN_y$ avec a entre 0 et 1, x entre 0 et 4,4, y entre 0 et 2,4, M1 et M2 étant l'un des composés suivants : Ti, Zr, Hf ;
- $SnZn_aO_x$ avec a entre 0 et 1,2 et x entre 0 et 3,5, préférentiellement entre 1,8 et 3,2, l'épaisseur de chaque couche étant inférieure à 80 nanomètres,

l'épaisseur totale du revêtement (3) étant inférieure à 90 nanomètres,

ledit ensemble optique (50) présentant, avant formation dudit revêtement (3) sur ladite deuxième face principale (12) du substrat, un état chromatique initial présentant une valeur initiale de chromaticité (a\*vi ; b\*vi) en réflexion, du côté de ladite deuxième face principale (12), selon un deuxième angle de réflexion (v), différente de la valeur initiale de chromaticité (a\*ui ; b\*ui) en réflexion selon le premier angle de réflexion (u), et

une distance chromatique initiale étant définie entre ladite valeur initiale de chromaticité (a\*ui ; b\*ui) observée audit premier angle de réflexion (u) et la valeur initiale de chromaticité (a\*vi ; b\*vi) observée audit deuxième angle de réflexion (v),

le revêtement (3) de contrôle chromatique en réflexion étant adapté pour que le système optique (40) présente un état chromatique final avec une valeur finale de chromaticité (a\*vf; b\*vf) en réflexion selon ledit deuxième angle de réflexion (v), de manière qu'une distance chromatique finale entre ladite valeur finale de chromaticité (a\*uf ; b\*uf) observée audit premier angle de réflexion (u) et la valeur finale de chromaticité (a\*vf ; b\*vf) observée au deuxième angle de réflexion (v) soit inférieure à ladite distance chromatique initiale,

ce qui correspond à une variation ΔCang(u,v) de distance chromatique (Cang(u,v)i, Cang(u,v)f) entre la distance chromatique initiale entre les valeurs initiales de chromaticité audits premier et deuxième angle de réflexion, d'une part, et la distance chromatique finale entre les valeurs finales de chromaticité audits premier et deuxième angle de réflexion, d'autre part, inférieure à 0, soit

[Math.13]

$$\Delta Cang(u,v) = Cang(u,v)f - Cang(u,v)i = \sqrt{(a*uf - a*vf)^2 + (b*uf - b*vf)^2} - \sqrt{(a*ui - a*vi)^2 + (b*ui - b*vi)^2} < 0,$$

au moins 30%, préférentiellement au moins 40% de l'intensité lumineuse totale de la réflexion globale sur le système optique à l'angle de réflexion (u) étant réalisée par la réflexion sur ledit revêtement (3) de contrôle chromatique.

2. Système optique selon la revendication précédente, dans lequel la distance entre les valeurs de chromaticité aux angles de réflexion de 0° et 60° est inférieure à 5.

3. Système optique (40) selon l'une des revendications précédentes, dans lequel ledit revêtement (3) de contrôle chromatique est directement en contact avec ledit substrat (1).

4. Système optique (40) selon l'une des revendications précédentes, dans lequel ledit revêtement (3) de contrôle chromatique comprend au moins une couche d'un matériau présentant des propriétés de réflexion telles qu'un faisceau lumineux réfléchi par le revêtement (3) présente un état chromatique prédéterminé tel que a\* et b\* sont inférieurs strictement à zéro au moins sur une plage prédéterminée d'angles de réflexion.

5. Système optique (40) selon l'une des revendications précédentes, dans lequel ladite au moins une couche dudit revêtement (3) de contrôle chromatique est composée d'un matériau parmi les suivants $SiO_2$, $TiO_2$, $Nb_2O_5$, $Si_3N_4$, $ZrO_2$, $TiZrO_4$, $SnO_2$, $SnZnO_3$, TiN, NbN, $SiO_xN_y$, $HfO_2$, HfN, SnN, TiOxNy, $NbO_xN_y$, et TiZrOxNy.

6. Système optique (40) selon l'une des revendications précédentes, dans lequel le revêtement (3) de contrôle chromatique comprend :

   - une couche de nitrure de silicium $SiN_x$ d'épaisseur comprise entre 1 et 65 nanomètres qui présente un état chromatique tel que a\*<0 et b\*<0, ou
   - une couche de dioxyde de titane TiO2 d'épaisseur comprise entre 25 et 55 nanomètres, qui présente un état chromatique tel que a\*<0 et b\*<0, ou
   - une couche d'oxyde de titane $TiO_x$ et une couche d'oxyde de silicium SiOx.

7. Système optique (40) selon la revendication immédiatement précédente, dans lequel l'épaisseur totale du revêtement (3) est inférieure à 70 nanomètres, de préférence inférieure à 60 nanomètres, de préférence inférieure à 50 nanomètres, de préférence inférieure à 40 nanomètres.

8. Système optique (40) selon l'une des revendications précédentes, dans lequel l'épaisseur de chaque couche du revêtement est inférieure à 50 nanomètres, de préférence inférieure à 40 nanomètres.

9. Système optique (40) selon l'une quelconque des revendications précédentes, dans lequel au moins 50%, préférentiellement au moins 60% de l'intensité lumineuse totale de la réflexion globale sur le système optique à l'angle de réflexion (u) est réalisée par la réflexion sur ledit revêtement (3) de contrôle chromatique.

10. Procédé de modification de la couleur destinée à être observée par un observateur en réflexion d'un ensemble optique (50) pour former un système optique (40), ledit ensemble optique (50) comprenant un substrat (1) à fonction verrière muni de première et deuxième faces principales opposées et

un dispositif fonctionnel électrochimique à propriétés optiques et/ou énergétiques électrocommandables formé sur ladite première face principale (11) du substrat, ce dispositif fonctionnel électrochimique comprenant au moins un empilement électrochrome (2) muni de :

une première couche conductrice transparente,
une électrode de travail agencée au-dessus de ladite première couche conductrice transparente,
une contre-électrode agencée au-dessus de ladite électrode de travail,
une seconde couche conductrice transparente agencée au-dessus de ladite contre-électrode,
des ions Lithium introduits au sein dudit empilement électrochrome, et, préférentiellement, une couche d'un conducteur ionique distincte intercalée
entre l'électrode et la contre-électrode,

ledit procédé modifiant la couleur depuis un état chromatique initial présentant une valeur initiale de chromaticité (L*ui ; a*ui ; b*ui) en réflexion du côté de la deuxième face principale du substrat (1), observée à un premier angle de réflexion (u) prédéterminé vers un état chromatique final présentant une valeur finale de chromaticité (L*uf ; a*uf ; b*uf) en réflexion du côté du revêtement (3), observée à ce premier angle de réflexion (u), cet état chromatique final étant plus proche que l'état chromatique initial d'un état chromatique de référence présentant une valeur de référence de chromaticité (L*uref ; a*uref ; b*uref) audit premier angle de réflexion (u), un rapprochement vers l'état chromatique de référence neutralisant la couleur de réflexion du système optique (40), ledit procédé comprenant au moins une étape de modification des propriétés de réflexion par agencement d'un revêtement (3) de contrôle chromatique en réflexion sur ladite deuxième face principale du substrat (1) dudit système optique (40), de sorte qu'une variation ΔCu de distance chromatique (Cui, Cuf) entre la valeur initiale de chromaticité et la valeur de référence de chromaticité d'une part et entre la valeur finale de chromaticité et la valeur de référence de chromaticité d'autre part soit inférieure à 0 audit premier angle de réflexion (u), soit :

[Math.14]

$$\Delta Cu = Cuf - Cui$$
$$= \sqrt{(a*uf - a*uref)^2 + (b*uf - b*uref)^2}$$
$$- \sqrt{(a*ui - a*uref)^2 + (b*ui - b*uref)^2} < 0$$

ledit revêtement (3) de contrôle chromatique comprenant au moins une couche d'épaisseur supérieure ou égale à 1 nanomètre, , préférentiellement inférieure à 70 nanomètres, préférentiellement inférieure à 60 nanomètres, préférentiellement inférieure à 50 nanomètres, préférentiellement inférieure à 40 nanomètres, d'au moins un matériau parmi les suivants :

- $MO_x$ avec x entre 1 et 3, préférentiellement entre 1,5 et 2,5, M étant l'un des composés suivants : Si, Ti, Zr, Hf, Sn ;
- $NbO_x$ avec x entre 1,5 et 3,5, préférentiellement entre 2 et 3 ;
- $MN_x$ avec x entre 0 et 2, préférentiellement entre 0,5 et 1,5, M étant l'un des composés suivants : Nb, Ti, Zr, Hf;
- $SiN_x$ avec x entre 0,7 et 2, préférentiellement entre 1 et 1,7 ;
- $SnN_x$ avec x entre 0 et 1,5, préférentiellement entre 0,3 et 1 ;
- $MO_xN_y$ avec x entre 0 et 2,2 et y entre 0 et 1,2, M étant l'un des composés suivants : Ti, Zr, Hf ;
- $MO_xN_y$ avec x entre 0 et 2,2 et y entre 0 et 1,5, M étant l'un des composés suivants : Si, Sn ;

- NbO$_x$N$_y$ avec x entre 0 et 2,7 et y entre 0 et 1,2 ;
- M1M2aO$_x$N$_y$ avec a entre 0 et 1, x entre 0 et 4,4, y entre 0 et 2,4, M1 et M2 étant l'un des composés suivants : Ti, Zr, Hf ;
- SnZn$_a$O$_x$ avec a entre 0 et 1,2 et x entre 0 et 3,5, préférentiellement entre 1,8 et 3,2, l'épaisseur de chaque couche étant inférieure à 80 nanomètres,

l'épaisseur totale du revêtement (3) étant inférieure à 90 nanomètres,
au moins 30%, préférentiellement au moins 40% de l'intensité lumineuse totale de la réflexion globale sur le système optique à l'angle de réflexion (u) étant réalisée par la réflexion sur ledit revêtement (3) de contrôle chromatique,
ledit état chromatique initial présentant une valeur initiale de chromaticité (L*vi ; a*vi ; b*vi) observée à un deuxième angle de réflexion (v) prédéterminé,
ledit procédé comprenant au moins une autre étape de modification des propriétés de réflexion de la face externe dudit ensemble optique de sorte qu'une variation ∆Cang(u,v) de distance chromatique (Cang(u,v)i, Cang(u,v)f) entre

- la distance chromatique initiale entre

- ladite valeur initiale de chromaticité (L*ui ; a*ui ; b*ui) en réflexion, du côté de ladite deuxième face principale (12), observée audit premier angle de réflexion (u) et
- une valeur initiale de chromaticité (L*vi ; a*vi ; b*vi) observée à un deuxième angle de réflexion (v), d'une part, et

- la distance chromatique finale, après formation du revêtement (3), entre les valeurs finales de chromaticité audits premier et deuxième angle de réflexion d'autre part soit inférieure à 0, soit

[Math.15]

$$\Delta Cang(u,v) = Cang(u,v)f - Cang(u,v)i$$
$$= \sqrt{(a*uf - a*vf)^2 + (b*uf - b*vf)^2}$$
$$- \sqrt{(a*ui - a*vi)^2 + (b*ui - b*vi)^2} < 0$$

11. Procédé de fabrication d'un système optique (40) selon l'une quelconque des revendications 1 à 9.

12. Utilisation d'un système optique (40) selon l'une des revendications 1 à 9 en tant que vitrage bâtiment, notamment vitrage extérieur de cloison interne ou de porte vitrée, en tant que vitrage équipant les cloisons internes ou les fenêtres de moyens de transport du type train, avion, voiture, bateau, en tant que vitrages d'écran de visualisation du type écran d'ordinateur ou de télévision, pour des objectifs d'appareils photographiques ou des protections de panneaux solaires.

**Patentansprüche**

1. Optisches System (40), umfassend:

- eine optische Baugruppe (50), umfassend

ein Substrat (1) mit einer Glasfunktion, das mit einer ersten und zweiten gegenüberliegenden Hauptfläche (11, 12) versehen ist, und
eine elektrochemische Funktionsvorrichtung mit elektrisch steuerbaren optischen und/oder energetischen Eigenschaften, die auf der ersten Hauptfläche (11) gebildet ist, wobei diese elektrochemische Funktionsvorrichtung mindestens einen elektrochromen Stapel (2) umfasst, der versehen ist mit:

einer ersten transparenten leitfähigen Schicht,
einer Arbeitselektrode, die über der ersten transparenten leitfähigen Schicht angeordnet ist, einer Gegenelektrode, die über der Arbeitselektrode angeordnet ist, einer zweiten transparenten leitfähige Schicht, die über der Gegenelektrode angeordnet ist,

Lithiumionen, die in den elektrochromen Stapel eingeführt sind, und vorzugsweise einer Schicht aus einem separaten Ionenleiter, die zwischen der Elektrode und der Gegenelektrode eingefügt ist,

- eine Beschichtung (3) zur Farbsteuerung der Reflexion, die auf der zweiten Hauptfläche (12) des Substrats gebildet ist und eine Außenfläche (41) des optischen Systems (40) bildet, so angepasst, dass das optische System (40) bei Reflexion an der Seite der Beschichtung (3) einen endgültigen Farbzustand mit einem endgültigen Chromatizitätswert (L*uf; a*uf; b*uf) aufweist, entsprechend einem ersten Reflexionswinkel (u), wobei die optische Baugruppe (50) vor der Bildung der Beschichtung (3) auf der zweiten Hauptfläche (12) des Substrats bei Reflexion an der Seite der zweiten Hauptfläche des Substrats (1) einen anfänglichen Farbzustand mit einem anfänglichen Chromatizitätswert (L*ui; a*ui; b*ui) aufweist, entsprechend dem ersten Reflexionswinkel (u), wobei der endgültige Farbzustand näher an einem Referenzfarbzustand mit einem Referenzchromatizitätswert (L*uref; a*uref; b*uref) bei dem ersten Reflexionswinkel (u) liegt als der anfängliche Farbzustand, und die Annäherung an den Referenzfarbzustand die Reflexionsfarbe des optischen Systems neutralisiert, was einer Variation ΔCu des Farbabstands (Cui, Cuf) zwischen dem anfänglichen Chromatizitätswert und dem Referenzwert einerseits und zwischen dem endgültigen Chromatizitätswert und dem Referenzwert andererseits bei dem ersten vorbestimmten Reflexionswinkel (u) kleiner als 0 entspricht, d. h.

[Math.11]

$$\Delta Cu = Cuf - Cui$$
$$= \sqrt{(a*uf - a*uref)^2 + (b*uf - b*uref)^2}$$
$$- \sqrt{(a*ui - a*uref)^2 + (b*ui - b*uref)^2} < 0$$

wobei die Beschichtung (3) zur Farbsteuerung mindestens eine Schicht mit einer Dicke größer oder gleich 1 Nanometer, vorzugsweise kleiner als 70 Nanometer, vorzugsweise kleiner als 60 Nanometer, vorzugsweise kleiner als 50 Nanometer, vorzugsweise kleiner als 40 Nanometer, aus mindestens einem der folgenden Materialien umfasst:

- $MO_x$ mit x zwischen 1 und 3, vorzugsweise zwischen 1,5 und 2,5, wobei M eine der folgenden Verbindungen ist: Si, Ti, Zr, Hf, Sn;
- $NbO_x$ mit x zwischen 1,5 und 3,5, vorzugsweise zwischen 2 und 3;
- $MN_x$ mit x zwischen 0 und 2, vorzugsweise zwischen 0,5 und 1,5, wobei M eine der folgenden Verbindungen ist: Nb, Ti, Zr, Hf;
- $SiN_x$ mit x zwischen 0,7 und 2, vorzugsweise zwischen 1 und 1,7;
- $SnN_x$ mit x zwischen 0 und 1,5, vorzugsweise zwischen 0,3 und 1;
- $MO_xN_y$ mit x zwischen 0 und 2,2 und y zwischen 0 und 1,2, wobei M eine der folgenden Verbindungen ist: Ti, Zr, Hf;
- $MO_xN_y$ mit x zwischen 0 und 2,2 und y zwischen 0 und 1,5, wobei M eine der folgenden Verbindungen ist: Si, Sn;
- $NbO_xN_y$ mit x zwischen 0 und 2,7 und y zwischen 0 und 1,2;
- $M1M2aO_xN_y$ mit a zwischen 0 und 1, x zwischen 0 und 4,4, y zwischen 0 und 2,4, wobei M1 und M2 eine der folgenden Verbindungen sind: Ti, Zr, Hf;
- $SnZn_aO_x$ mit a zwischen 0 und 1,2 und x zwischen 0 und 3,5, vorzugsweise zwischen 1,8 und 3,2, wobei die Dicke jeder Schicht weniger als 80 Nanometer beträgt,

wobei die Gesamtdicke der Beschichtung (3) weniger als 90 Nanometer beträgt,

wobei die optische Baugruppe (50) vor der Bildung der Beschichtung (3) auf der zweiten Hauptfläche (12) des Substrats einen anfänglichen Farbzustand mit einem anfänglichen Chromatizitätswert (a*vi; b*vi) in Reflexion auf der Seite der zweiten Hauptfläche (12) entsprechend einem zweiten Reflexionswinkel (v) aufweist, der sich von dem anfänglichen Chromatizitätswert (a*ui; b*ui) in Reflexion entsprechend dem ersten Reflexionswinkel (u) unterscheidet, und ein anfänglicher Farbabstand zwischen dem anfänglichen Chromatizitätswert (a*ui; b*ui), der bei dem ersten Reflexionswinkel (u) beobachtet wird, und dem anfänglichen Chromatizitätswert (a*vi; b*vi), der bei dem zweiten Reflexionswinkel (v) beobachtet wird, definiert ist, wobei die Beschichtung (3) zur Farbsteuerung in Reflexion so angepasst ist, dass das optische System (40) einen endgültigen Farbzustand mit einem endgültigen Chromatizitätswert (a*vf; b*vf) in Reflexion entsprechend dem zweiten Reflexionswinkel (v) aufweist, sodass ein endgültiger Farbabstand zwischen dem endgültigen Chromatizitätswert (a*uf; b*uf), der bei dem ersten Reflexionswinkel (u) beobachtet wird, und dem endgültigen Chromatizitätswert (a*vf; b*vf), der bei dem zweiten Reflexionswinkel (v) beobachtet wird, kleiner ist als der anfängliche Farbabstand,

was einer Variation ΔCang(u,v) des Farbabstands (Cang(u,v)i, Cang(u,v)f) zwischen dem anfänglichen Farbabstand zwischen den anfänglichen Chromatizitätswerten beim ersten und zweiten Reflexionswinkel einerseits und dem endgültigen Farbabstand zwischen den endgültigen Chromatizitätswerten beim ersten und zweiten Reflexionswinkel andererseits kleiner als 0 entspricht, d. h.

[Math.13]

$$\Delta Cang(u,v) = Cang(u,v)f - Cang(u,v)i = \sqrt{(a*uf - a*vf)^2 + (b*uf - b*vf)^2} - \sqrt{(a*ui - a*vi)^2 + (b*ui - b*vi)^2} < 0,$$

wobei mindestens 30 %, vorzugsweise mindestens 40 % der Gesamtlichtintensität der Gesamtreflexion am optischen System unter dem Reflexionswinkel (u) durch die Reflexion an der Beschichtung (3) zur Farbsteuerung erreicht werden.

2. Optisches System nach dem vorstehenden Anspruch, wobei der Abstand zwischen den Chromatizitätswerten bei den Reflexionswinkeln von 0° und 60° kleiner ist als 5.

3. Optisches System (40) nach einem der vorstehenden Ansprüche, wobei die Beschichtung (3) zur Farbsteuerung direkt mit dem Substrat (1) in Kontakt steht.

4. Optisches System (40) nach einem der vorstehenden Ansprüche, wobei die Beschichtung (3) zur Farbsteuerung mindestens eine Schicht aus einem Material mit solchen Reflexionseigenschaften umfasst, dass ein von der Beschichtung (3) reflektierter Lichtstrahl einen vorbestimmten Farbzustand aufweist, sodass a* und b* mindestens über einen vorbestimmten Bereich von Reflexionswinkeln strikt kleiner als Null sind.

5. Optisches System (40) nach einem der vorstehenden Ansprüche, wobei die mindestens eine Schicht der Beschichtung (3) zur Farbsteuerung aus einem Material unter den folgenden $SiO_2$, $TiO_2$, $Nb_2O_5$, $Si_3N_4$, $ZrO_2$, $TiZrO_4$, $SnO_2$, $SnZnO_3$, $TiN$, $NbN$, $SiO_XN_y$, $HfO_2$, $HfN$, $SnN$, $TiO_XN_y$, $NbO_XN_y$ und $TiZrO_XN_v$ zusammengesetzt ist..

6. Optisches System (40) nach einem der vorstehenden Ansprüche, bei dem die Beschichtung (3) zur Farbsteuerung umfasst:

- eine Schicht aus Siliciumnitrid $SiN_x$ mit einer Dicke zwischen 1 und 65 Nanometern, die einen Farbzustand aufweist, sodass a*<0 und b*<0 ist, oder
- eine Schicht aus Titandioxid $TiO_2$ mit einer Dicke zwischen 25 und 55 Nanometern, die einen Farbzustand aufweist, sodass a*<0 und b*<0 ist, oder
- eine Schicht aus Titanoxid TiOx und eine Schicht aus Siliciumoxid SiOx.

7. Optisches System (40) nach dem unmittelbar vorstehenden Anspruch, wobei die Gesamtdicke der Beschichtung (3) weniger als 70 Nanometer, vorzugsweise weniger als 60 Nanometer, vorzugsweise weniger als 50 Nanometer, vorzugsweise weniger als 40 Nanometer beträgt.

8. Optisches System (40) nach einem der vorstehenden Ansprüche, wobei die Dicke jeder Schicht der Beschichtung weniger als 50 Nanometer, vorzugsweise weniger als 40 Nanometer beträgt.

9. Optisches System (40) nach einem der vorstehenden Ansprüche, wobei mindestens 50 %, vorzugsweise mindestens 60 % der Gesamtlichtintensität der Gesamtreflexion am optischen System unter dem Reflexionswinkel (u) durch die Reflexion an der Beschichtung (3) zur Farbsteuerung erreicht werden.

10. Verfahren zum Modifizieren der Farbe, die von einem Beobachter in der Reflexion einer optischen Baugruppe (50) wahrgenommen werden soll, um ein optisches System (40) zu bilden, wobei die optische Baugruppe (50) umfasst

ein Substrat (1) mit einer Glasfunktion, das mit einer ersten und zweiten gegenüberliegenden Hauptfläche versehen ist, und

eine elektrochemische Funktionsvorrichtung mit elektrisch steuerbaren optischen und/oder energetischen Eigenschaften, die auf der ersten Hauptfläche (11) des Substrats gebildet ist, wobei diese elektrochemische Funktionsvorrichtung mindestens einen elektrochromen Stapel (2) umfasst, der versehen ist mit:

einer ersten transparenten leitfähigen Schicht,
einer Arbeitselektrode, die über der ersten transparenten leitfähigen Schicht angeordnet ist,
einer Gegenelektrode, die über der Arbeitselektrode angeordnet ist, einer zweiten transparenten leitfähigen Schicht, die über der Gegenelektrode angeordnet ist,
Lithiumionen, die in den elektrochromen Stapel eingeführt sind, und vorzugsweise einer Schicht aus einem separaten Ionenleiter, die zwischen der Elektrode und der Gegenelektrode eingefügt ist,
wobei das Verfahren die Farbe von einem anfänglichen Farbzustand mit einem anfänglichen Chromatizitätswert (L*ui; a*ui; b*ui) in Reflexion auf der Seite der zweiten Hauptfläche des Substrats (1), der unter einem ersten vorbestimmten Reflexionswinkel (u) beobachtet wird, zu einem endgültigen Farbzustand mit einem endgültigen Chromatizitätswert (L*uf; a*uf; b*uf) in Reflexion auf der Seite der Beschichtung (3), der unter diesem ersten Reflexionswinkel (u) beobachtet wird, modifiziert, wobei dieser endgültige Farbzustand näher an einem Referenzfarbzustand mit einem Referenzchromatizitätswert (L*uref; a*uref; b*uref) bei dem ersten Reflexionswinkel (u) liegt als der anfängliche Farbzustand, wobei eine Annäherung an den Referenzfarbzustand die Reflexionsfarbe des optischen Systems (40) neutralisiert, wobei das Verfahren mindestens einen Schritt zum Modifizieren der Reflexionseigenschaften durch Anordnen einer Beschichtung (3) zur Farbsteuerung in Reflexion auf der zweiten Hauptfläche des Substrats (1) des optischen Systems (40) umfasst, sodass eine Variation $\Delta Cu$ des Farbabstands (Cui, Cuf) zwischen dem anfänglichen Chromatizitätswert und dem Referenzchromatizitätswert einerseits und zwischen dem endgültigen Chromatizitätswert und dem Referenzchromatizitätswert andererseits bei dem ersten Reflexionswinkel (u) kleiner als 0 ist, d. h.:

[Math.14]

$$\Delta Cu = Cuf - Cui$$
$$= \sqrt{(a*uf - a*uref)^2 + (b*uf - b*uref)^2}$$
$$- \sqrt{(a*ui - a*uref)^2 + (b*ui - b*uref)^2} < 0$$

wobei die Beschichtung (3) zur Farbsteuerung mindestens eine Schicht mit einer Dicke größer oder gleich 1 Nanometer, vorzugsweise kleiner als 70 Nanometer, vorzugsweise kleiner als 60 Nanometer, vorzugsweise kleiner als 50 Nanometer, vorzugsweise kleiner als 40 Nanometer, aus mindestens einem der folgenden Materialien umfasst:

- $MO_x$ mit x zwischen 1 und 3, vorzugsweise zwischen 1,5 und 2,5, wobei M eine der folgenden Verbindungen ist: Si, Ti, Zr, Hf, Sn;
- $NbO_x$ mit x zwischen 1,5 und 3,5, vorzugsweise zwischen 2 und 3;
- $MN_x$ mit x zwischen 0 und 2, vorzugsweise zwischen 0,5 und 1,5, wobei M eine der folgenden Verbindungen ist: Nb, Ti, Zr, Hf;
- $SiN_x$ mit x zwischen 0,7 und 2, vorzugsweise zwischen 1 und 1,7;
- $SnN_x$ mit x zwischen 0 und 1,5, vorzugsweise zwischen 0,3 und 1;
- $MO_xN_y$ mit x zwischen 0 und 2,2 und y zwischen 0 und 1,2, wobei M eine der folgenden Verbindungen ist: Ti, Zr, Hf;
- $MO_xN_y$ mit x zwischen 0 und 2,2 und y zwischen 0 und 1,5, wobei M eine der folgenden Verbindungen ist: Si, Sn;
- $NbO_xN_y$ mit x zwischen 0 und 2,7 und y zwischen 0 und 1,2;
- $M1M2aO_xN_y$ mit a zwischen 0 und 1, x zwischen 0 und 4,4, y zwischen 0 und 2,4, wobei M1 und M2 eine der folgenden Verbindungen sind: Ti, Zr, Hf;
- $SnZn_aO_x$ mit a zwischen 0 und 1,2 und x zwischen 0 und 3,5, vorzugsweise zwischen 1,8 und 3,2, wobei die Dicke jeder Schicht weniger als 80 Nanometer beträgt,

wobei die Gesamtdicke der Beschichtung (3) weniger als 90 Nanometer beträgt,
wobei mindestens 30 %, vorzugsweise mindestens 40 % der Gesamtlichtintensität der Gesamtreflexion am optischen System unter dem Reflexionswinkel (u) durch die Reflexion an der Beschichtung (3) zur Farbsteuerung erreicht werden,

wobei der anfängliche Farbzustand einen anfänglichen Chromatizitätswert (L*vi; a*vi; b*vi) aufweist, der bei einem zweiten vorbestimmten Reflexionswinkel (v) beobachtet wird, wobei das Verfahren mindestens einen weiteren Schritt zum Modifizieren der Reflexionseigenschaften der äußeren Seite der optischen Baugruppe umfasst, sodass eine Variation ΔCang(u,v) des Farbzustands (Cang(u,v)i, Cang(u,v)f) zwischen

- dem anfänglichen Farbabstand zwischen
- dem anfänglichen Chromatizitätswert (L*ui; a*ui; b*ui) in Reflexion auf der Seite der zweiten Hauptfläche (12), der unter dem ersten Reflexionswinkel (u) beobachtet wird, und
- einem anfänglichen Chromatizitätswert (L*vi; a*vi; b*vi), der unter einem zweiten Reflexionswinkel (v) beobachtet wird,

einerseits und

- dem endgültigen Farbabstand nach der Bildung der Beschichtung (3) zwischen den endgültigen Chromatizitätswerten beim ersten und zweiten Reflexionswinkel andererseits kleiner als 0 ist, d. h.

[Math.15]

$$\Delta Cang(u,v) = Cang(u,v)f - Cang(u,v)i$$
$$= \sqrt{(a*uf - a*vf)^2 + (b*uf - b*vf)^2}$$
$$- \sqrt{(a*ui - a*vi)^2 + (b*ui - b*vi)^2} < 0$$

11. Verfahren zum Herstellen eines optischen Systems (40) nach einem der Ansprüche 1 bis 9.

12. Verwendung eines optischen Systems (40) nach einem der Ansprüche 1 bis 9 als eine Gebäudeverglasung, insbesondere eine Außenverglasung einer Innentrennwand oder einer verglasten Tür, als eine Verglasung, die Innentrennwände oder Fenster von Transportmitteln der Art Zug, Flugzeug, Auto, Schiff ausrüstet, als Verglasungen eines Anzeigebildschirms der Art Rechner- oder Fernsehbildschirm, für Objektive von Fotoapparaten oder Schutzeinrichtungen von Solarmodulen.

**Claims**

1. An optical system (40) comprising:

- an optical assembly (50) comprising

a glazing-function substrate (1) equipped with first and second opposite main faces (11, 12), and an electrochemical functional device with electrically controllable optical and/or energetic properties formed on said first main face (11), this electrochemical functional device comprising at least one electrochromic stack (2) provided with:

a first transparent conductive layer,
a working electrode arranged above said first transparent conductive layer, a counter-electrode arranged above said working electrode, a second transparent conductive layer arranged above said counter-electrode,
lithium ions introduced into said electrochromic stack, and, preferentially, a separate layer of an ionic conductor interposed between the electrode and the counter-electrode,

- a color control coating (3) for controlling color in reflection formed on said second main face (12) of the substrate, and forming an external face (41) of said optical system (40), adapted so that the optical system (40) has a final color state with a final color value (L*uf; a*uf; b*uf) in reflection from the side of the coating (3), at a first reflection angle (u),

said optical assembly (50) having, before formation of said coating (3) on said second main face (12) of the substrate, an initial color state with an initial color value (L*ui; a*ui; b*ui) in reflection from the side of the second main face of the substrate (1), at said first reflection angle (u),
said final color state being closer than the initial color state to a reference color state having a reference color value (L*uref; a*uref; b*uref) at said first reflection angle (u), the approach toward the reference color state neutralizing the reflection color of the optical system, corresponding to a variation ΔCu in color distance (Cui, Cuf) between the initial color value and the reference value, on the one hand, and between the final color value and the reference value, on the other hand, of less than 0 at said predetermined first reflection angle (u), that is,

[Math. 11]

$$\Delta Cu = Cuf - Cui$$
$$= \sqrt{(a*uf - a*uref)^2 + (b*uf - b*uref)^2}$$
$$- \sqrt{(a*ui - a*uref)^2 + (b*ui - b*uref)^2} < 0$$

said color control coating (3) comprising at least one layer of thickness greater than or equal to 1 nanometer, preferentially less than 70 nanometers, preferentially less than 60 nanometers, preferentially less than 50 nanometers, preferentially less than 40 nanometers, of at least one of the following materials:

- $MO_x$ with x between 1 and 3, preferentially between 1.5 and 2.5, M being one of the following compounds: Si, Ti, Zr, Hf, Sn;
- $NbO_x$ with x between 1.5 and 3.5, preferentially between 2 and 3;
- $MN_x$ with x between 0 and 2, preferentially between 0.5 and 1.5, M being one of the following compounds: Nb, Ti, Zr, Hf;
- $SiN_x$ with x between 0.7 and 2, preferentially between 1 and 1.7;
- $SnN_x$ with x between 0 and 1.5, preferentially between 0.3 and 1;
- $MO_xN_y$ with x between 0 and 2.2 and y between 0 and 1.2, M being one of the following compounds: Ti, Zr, Hf;
- $MO_xN_y$ with x between 0 and 2.2 and y between 0 and 1.5, M being one of the following compounds: Si, Sn;
- $NbO_xN_y$ with x between 0 and 2.7 and y between 0 and 1.2;
- $M1M2aO_xN_y$ with a between 0 and 1, x between 0 and 4.4, y between 0 and 2.4, M1 and M2 being one of the following compounds: Ti, Zr, Hf;
- $SnZn_aO_x$ with a between 0 and 1.2 and x between 0 and 3.5, preferentially between 1.8 and 3.2,

  the thickness of each layer being less than 80 nanometers,
  the total thickness of the coating (3) being less than 90 nanometers,
  said optical assembly (50) having, prior to formation of said coating (3) on said second main face (12) of the substrate, an initial color state having an initial color value (a*vi; b*vi) in reflection, on the side of said second main face (12), at a second reflection angle (v), different from the initial color value (a*ui; b*ui) in reflection at the first reflection angle (u), and an initial color distance being defined between said initial color value (a*ui; b*ui) observed at said first reflection angle (u) and the initial color value (a*vi; b*vi) observed at said second reflection angle (v), the reflection color control coating (3) being adapted so that the optical system (40) has a final color state with a final color value (a*vf; b*vf) in reflection at said second reflection angle (v), such that a final color distance between said final color value (a*uf; b*uf) observed at said first reflection angle (u) and the final color value (a*vf; b*vf) observed at said second reflection angle (v) is less than said initial color distance,
  which corresponds to a variation ΔCang(u,v) in color distance (Cang(u,v)i, Cang(u,v)f) between the initial color distance between the initial color values at said first and second reflection angles, on the one hand, and the final color distance between the final color values at said first and second reflection angles, on the other hand, of less than 0, that is,

## [Math.13]

$$\Delta Cang(u,v) = Cang(u,v)f - Cang(u,v)i = \sqrt{(a*uf - a*vf)^2 + (b*uf - b*vf)^2} - \sqrt{(a*ui - a*vi)^2 + (b*ui - b*vi)^2} < 0,$$

at least 30%, preferentially at least 40%, of the total light intensity of the overall reflection on the optical system at the reflection angle (u) is achieved by reflection on said color control coating (3).

2. The optical system according to the preceding claim, wherein the distance between the color values at reflection angles 0° and 60° is less than 5.

3. The optical system (40) according to one of the preceding claims,
   wherein said color control coating (3) is in direct contact with said substrate (1).

4. The optical system (40) according to one of the preceding claims,
   wherein said color control coating (3) comprises at least one layer of a material having reflective properties such that a light beam reflected by the coating (3) has a predetermined color state such that a* and b* are strictly less than zero at least over a predetermined range of reflection angles.

5. The optical system (40) according to one of the preceding claims,
   wherein said at least one layer of said color control coating (3) is composed of one of the following materials: $SiO_2$, $TiO_2$, $Nb_2O_5$, $Si_3N_4$, $ZrO_2$, $TiZrO_4$, $SnO_2$, $SnZnO_3$, TiN, NbN, $SiO_xN_y$, $HfO_2$, HfN, SnN, $TiO_xN_y$, $NbO_xN_y$, and $TiZrO_xN_v$.

6. The optical system (40) according to one of the preceding claims, wherein the color control coating (3) comprises:

   - a layer of silicon nitride $SiN_x$ with a thickness of between 1 and 65 nanometers, having a color state such that a*<0 and b*<0, or
   - a layer of titanium dioxide $TiO_2$ with a thickness of between 25 and 55 nanometers, having a color state such that a*<0 and b*<0, or
   - a layer of titanium oxide $TiO_x$ and a layer of silicon oxide $SiO_x$.

7. The optical system (40) according to the immediately preceding claim, wherein the total thickness of the coating (3) is less than 70 nanometers, preferably less than 60 nanometers, preferably less than 50 nanometers, preferably less than 40 nanometers.

8. The optical system (40) according to one of the preceding claims,
   wherein the thickness of each layer of the coating is less than 50 nanometers, preferably less than 40 nanometers.

9. The optical system (40) according to any one of the preceding claims, wherein at least 50%, preferentially at least 60%, of the total light intensity of the overall reflection on the optical system at the reflection angle (u) is achieved by reflection on said color control coating (3).

10. A method of modifying the color intended to be observed by an observer in reflection of an optical assembly (50) for forming an optical system (40), said optical assembly (50) comprising

    a glazing-function substrate (1) equipped with first and second opposite main faces, and
    an electrochemical functional device with electrically controllable optical and/or energetic properties formed on said first main face (11) of the substrate, this electrochemical functional device comprising at least one electrochromic stack (2) provided with:

    a first transparent conductive layer,
    a working electrode arranged above said first transparent conductive layer,
    a counter-electrode arranged above said working electrode,
    a second transparent conductive layer arranged above said counter-electrode,
    lithium ions introduced into said electrochromic stack,
    and, preferentially, a separate layer of an ionic conductor interposed between the electrode and the counter-electrode,

said method modifying the color from an initial color state having an initial color value (L*ui; a*ui; b*ui) in reflection from the second main face side of the substrate (1), observed at a predetermined first reflection angle (u), to a final color state having a final color value (L*uf; a*uf; b*uf) in reflection from the coating side (3), observed at this first reflection angle (u), this final color state being closer than the initial color state to a reference color state having a reference color value (L*uref; a*uref; b*uref) at said first reflection angle (u), an approach toward the reference color state neutralizing the reflection color of the optical system (40), said method comprising at least one step of modifying the reflection properties by arranging a reflection color control coating (3) on said second main face of the substrate (1) of said optical system (40), so that a variation ΔCu in color distance (Cui, Cuf) between the initial color value and the reference color value on the one hand, and between the final color value and the reference color value on the other hand, is less than 0 at said first reflection angle (u), that is:

[Math. 14]

$$\Delta Cu = Cuf - Cui$$
$$= \sqrt{(a*uf - a*uref)^2 + (b*uf - b*uref)^2}$$
$$- \sqrt{(a*ui - a*uref)^2 + (b*ui - b*uref)^2} < 0$$

said color control coating (3) comprising at least one layer of thickness greater than or equal to 1 nanometer, preferentially less than 70 nanometers, preferentially less than 60 nanometers, preferentially less than 50 nanometers, preferentially less than 40 nanometers, of at least one of the following materials:

- $MO_x$ with x between 1 and 3, preferentially between 1.5 and 2.5, M being one of the following compounds: Si, Ti, Zr, Hf, Sn;
- $NbO_x$ with x between 1.5 and 3.5, preferentially between 2 and 3;
- $MN_x$ with x between 0 and 2, preferentially between 0.5 and 1.5, M being one of the following compounds: Nb, Ti, Zr, Hf;
- $SiN_x$ with x between 0.7 and 2, preferentially between 1 and 1.7;
- $SnN_x$ with x between 0 and 1.5, preferentially between 0.3 and 1;
- $MO_xN_y$ with x between 0 and 2.2 and y between 0 and 1.2, M being one of the following compounds: Ti, Zr, Hf;
- $MO_xN_y$ with x between 0 and 2.2 and y between 0 and 1.5, M being one of the following compounds: Si, Sn;
- $NbO_xN_y$ with x between 0 and 2.7 and y between 0 and 1.2;
- $M1M2aO_xN_y$ with a between 0 and 1, x between 0 and 4.4, y between 0 and 2.4, M1 and M2 being one of the following compounds: Ti, Zr, Hf;
- $SnZn_aO_x$ with a between 0 and 1.2 and x between 0 and 3.5, preferentially between 1.8 and 3.2, the thickness of each layer being less than 80 nanometers,

the total thickness of the coating (3) being less than 90 nanometers,
at least 30%, preferentially at least 40%, of the total light intensity of the overall reflection on the optical system at the reflection angle (u) is achieved by reflection on said color control coating (3),
said initial color state having an initial color value (L*vi; a*vi; b*vi) observed at a second predetermined reflection angle (v),
said method comprising at least one further step of modifying the reflective properties of the external face of said optical assembly so that a variation ΔCang(u,v) of color distance (Cang(u,v)i, Cang(u,v)f) between

- the initial color distance between
- said initial color value (L*ui; a*ui; b*ui) in reflection, on the side of said second main face (12), observed at said first reflection angle (u), and
- an initial color value (L*vi; a*vi; b*vi) observed at a second reflection angle (v), on the one hand, and
- the final color distance, after formation of the coating (3), between the final color values at said first and second reflection angles, is either less than 0, or

## [Math.15]

$$\Delta Cang(u,v) = Cang(u,v)f - Cang(u,v)i$$
$$= \sqrt{(a * uf - a * vf)^2 + (b * uf - b * vf)^2}$$
$$- \sqrt{(a * ui - a * vi)^2 + (b * ui - b * vi)^2} < 0$$

**11.** A method for manufacturing an optical system (40) according to any one of claims 1 to 9.

**12.** A use of an optical system (40) according to one of claims 1 to 9 as building glazing, in particular external glazing for internal partitions or glass doors, as glazing for internal partitions or windows of means of transport such as trains, airplanes, cars or boats, as glazing for display screens such as computer or television screens, for camera lenses or solar panel covers.

[Fig.1]

[Fig.2]

[Fig.3]

[Fig.4]

[Fig.5]

[Fig.6]

[Fig.7]

[Fig.8]

[Fig.9]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018321567 A1
- US 2001021066 A1
- WO 2011161110 A1